# EUROPÄISCHE PATENTANMELDUNG

(11) **EP 4 170 848 A1**
(43) Veröffentlichungstag der Anmeldung: **26.04.2023**
(21) Anmeldenummer: 21203591.9
(22) Anmeldetag: 20.10.2021
(51) Int. Cl.: H02J 3/24, H02J 3/38, F03D 7/02

(54) **VERFAHREN ZUM DÄMPFEN NIEDERFREQUENTER SCHWINGUNGEN IN EINEM ELEKTRISCHEN VERSORGUNGSNETZ**

(71) Anmelder: Wobben Properties GmbH, 26607 Aurich (DE)
(72) Erfinder: Die Erfindernennung liegt noch nicht vor
(74) Vertreter: Eisenführ Speiser

(57) **Zusammenfassung**

Verfahren zum Dämpfen niederfrequenter Schwingungen in einem elektrischen Versorgungsnetz mittels einer in das elektrische Versorgungsnetz einspeisenden Einspeiseeinrichtung, insbesondere Windenergieanlage, wobei das elektrische Versorgungsnetz eine Netzspannung und eine Netzfrequenz aufweist, umfassend die Schritte: Aufnehmen eines die niederfrequenten Schwingungen aufweisenden Netzsignals, Aufteilen eines Gesamtfrequenzbereichs des Netzsignals, in dem zu dämpfende Schwingungen zu erwarten sind, in mehrere Teilfrequenzbereiche, jeweils mit einer unteren und einer oberen Bereichsfrequenz, Durchführen jeweils einer Frequenzanalyse des Netzsignals für jeden Teilfrequenzbereich, um jeweils eine oder mehrere Schwingungen mit einer in dem Teilfrequenzbereich liegenden Schwingungsfrequenz zu identifizieren, sofern vorhanden, in Abhängigkeit von den Frequenzanalysen aller Teilfrequenzbereiche Identifizieren einer zu dämpfenden niederfrequenten Schwingung als Zielschwingung, Erfassen der Zielschwingung wenigstens nach Frequenz und Amplitude und optional nach Phase, Bestimmen eines Dämpfungssollsignals in Abhängigkeit von der nach Frequenz und Amplitude und ggf. Phase erfassten Zielschwingung zum Dämpfen der erfassten Zielschwingung, Erzeugen eines Einspeisesollsignals in Abhängigkeit von dem Dämpfungssollsignal und einem Basissollsignal und Erzeugen und Einspeisen eines Einspeisesignals in Abhängigkeit von dem Einspeisesollsignals (QE).

## Beschreibung

Die vorliegende Erfindung betrifft ein Verfahren zum Dämpfen niederfrequenter Schwingungen in einem elektrischen Versorgungsnetz mittels einer in das elektrische Versorgungsnetz einspeisenden Einspeiseeinrichtung, insbesondere mittels einer Windenergieanlage. Außerdem betrifft die vorliegende Erfindung eine entsprechende Windenergieanlage.

Windenergieanlagen sind bekannt, sie speisen elektrische Leistung in ein elektrisches Versorgungsnetz ein und werden häufig auch zum Stützen des elektrischen Versorgungsnetzes eingesetzt. So ist es bspw. bekannt, Blindleistung in Abhängigkeit von der Netzspannung des elektrischen Versorgungsnetzes einzuspeisen. Insbesondere wird dabei eine Abweichung der Netzspannung von einer Netznennspannung betrachtet und abhängig davon wird Blindleistung eingespeist, was durch Veränderung des Phasenwinkels des einspeisenden Stroms realisiert werden kann. Ein solches Verfahren ist aus dem Dokument US 6,965,174 bekannt.

Darüber hinaus können im elektrischen Versorgungsnetz sog. subsynchrone Schwingungen auftreten. Diese können sich als Schwankungen der Spannungsamplituden bemerkbar machen. Solche Schwankungen können Frequenzen unterhalb der Netznennfrequenz aufweisen, insbesondere im Bereich von wenigen Hertz oder sogar mit Frequenzen unter 1 Hz. Besonders werden hier elektromechanische Schwingungen betrachtet, nämlich mechanische Schwingungen konventioneller Kraftwerke, die infolge einer Störung auftreten und zu elektrischen Schwingungen im Netz führen, die eine Reaktion anderer Teilnehmer hervorrufen Das sind im Wesentlichen langsame Schwingungen im Bereich von 0,1 Hz-1,5 Hz, die hier betrachtet werden. Das sind besonders Inter-Area-Schwingungen, die entsprechend langsam sind, nämlich meist unter 1 Hz, selten bis 1,5 Hz, oder in einer Ausnahme 1,8 Hz erreichen können.

Ein Problem solcher subsynchronen Schwingungen ist, dass sie schwer zu erfassen sind. Eine Möglichkeit der Erfassung besteht durch Verwendung einer Fast-Fourier-Transformation, was aus dem Dokument US 2021/0208186 bekannt ist.

Eine solche Erfassung ist vorgeschlagen worden für die Überprüfung auf das Vorliegen zumindest einer subsynchronen Schwingung über ein Frequenzspektrum, das über mehrere Zehnerpotenzen reichen kann. Die Erfassung einer subsynchronen Schwingung ist mit einem solchen Verfahren grundsätzlich möglich, das Verfahren kann aber für eine Implementierung, die auch eine Dämpfung solcher subsynchronen Schwingungen vorsieht, Nachteile aufweisen.

Besonders ist für die Erfassung, um darauf basierend eine Dämpfung vorzusehen, oftmals eine höhere Güte der Erfassung erforderlich, ohne dass aber ein so großes Frequenzspektrum abgedeckt werden muss. Besonders kommt in Betracht, dass nicht jede Frequenz, in der eine subsynchrone Schwingung auftreten kann, auch störend sein muss. Stattdessen kann eine Dämpfung subsynchroner Schwingungen oftmals nur in einem eng vorgegebenen Frequenzbereich erforderlich sein.

Darüber hinaus kann das Dämpfen subsynchroner Schwingungen durch Einspeisung von Blindleistung durchgeführt werden. Eine solche dämpfende Blindleistungseinspeisung kann mit einer oben genannten spannungsabhängigen Blindleistungseinspeisung ggf. kollidieren. So kommt in Betracht, dass eine spannungsabhängige Blindleistungseinspeisung gegen eine Blindleistungseinspeisung arbeitet, die subsynchrone Schwingungen dämpfen soll.

Der vorliegenden Erfindung liegt somit die Aufgabe zu Grunde, zumindest eines der vorstehend genannten Probleme zu adressieren. Insbesondere soll eine Lösung vorgeschlagen werden, bei der subsynchrone Schwingungen in einem relevanten Frequenzbereich erkannt und gedämpft werden, insbesondere mit möglichst wenig Einfluss auf andere netzstützende Einspeisungen. Zumindest soll zu bisher bekannten Lösungen eine alternative Lösung vorgeschlagen werden.

Erfindungsgemäß wird ein Verfahren gemäß Anspruch 1 vorgeschlagen. Ein solches Verfahren betrifft somit das Dämpfen niederfrequenter Schwingungen in einem elektrischen

Versorgungsnetz mittels einer in das elektrische Versorgungsnetz einspeisenden Einspeiseeinrichtung. Eine solche Einspeiseeinrichtung kann insbesondere eine Windenergieanlage sein. Es kommen aber auch andere dezentrale Einspeiseeinrichtungen in Betracht, z.B. eine Einspeisung aus einem Energiespeicher, aus dem mittels eine Frequenzumrichters eingespeist wird. Es kommt auch eine Einspeisung aus anderen Energiequellen in Betracht. Für direkt gekoppelte Synchrongeneratoren ist das Verfahren grundsätzlich nicht geeignet. Die einspeisenden Einspeiseeinrichtungen, die hier verwendet werden können, sind somit insbesondere umrichtergeführte Einspeiseeinrichtungen. Insbesondere sog. Vollumrichterkonzepte werden vorgeschlagen, bei denen die gesamte eingespeiste Leistung durch eine Umrichteranordnung geführt wird, sodass die gesamte eingespeiste Leistung durch die Umrichteranordnung in Amplitude, Frequenz und Phase gesteuert werden kann.

Es wird von einem elektrischen Versorgungsnetz ausgegangen, dass eine Netzfrequenz aufweist, insbesondere übliche 50Hz oder 60Hz. Gemäß einem Schritt wird vorgeschlagen, ein die niederfrequenten Schwingungen aufweisendes Netzsignal aufzunehmen. Insbesondere wird hier eine Netzspannung erfasst. Natürlich kann es auch vorkommen, dass sich herausstellt, dass gar keine niederfrequenten Schwingungen vorliegen. Potentiell weist dieses Netzsignal aber die niederfrequenten Schwingungen, oder zumindest eine, auf.

Es wird dann ein Aufteilen eines Gesamtfrequenzbereiches des Netzsignals, in dem zu dämpfende Schwingungen zu erwarten sind, in mehrere Teilfrequenzbereiche vorgeschlagen. Jeder Teilfrequenzbereich weist eine untere, obere und mittlere Bereichsfrequenz auf. Sind bspw. zu dämpfende Schwingungen in einem Frequenzbereich von 1-5Hz zu erwarten, so kann ein Teilfrequenzbereich von 1Hz bis 3Hz reichen und damit 1Hz, 2Hz und 3Hz als untere, mittlere und obere Bereichsfrequenz aufweisen. Ein weiterer Teilfrequenzbereich kann von 2Hz bis 4Hz reichen und damit 2Hz, 3Hz und 4Hz als untere, mittlere und obere Bereichsfrequenz aufweisen. Ein dritter Teilfrequenzbereich kann von 3Hz bis 5Hz reichen und entsprechend 3Hz, 4Hz und 5Hz als untere, mittlere und obere Bereichsfrequenz aufweisen.

An diesem Beispiel ist zu erkennen, dass die Teilfrequenzbereiche sich auch überschneiden können, sie müssen sich aber nicht überschneiden oder können sich auch im geringeren Maße überschneiden.

Die mittlere Bereichsfrequenz kann als arithmetisches Mittel der unteren und oberen Bereichsfrequenz gewählt werden.

Es wird dann vorgeschlagen, jeweils eine Frequenzanalyse des Netzsignals für jeden Teilfrequenzbereich durchzuführen, um jeweils eine oder mehrere Schwingungen mit einer in dem Teilfrequenzbereich liegenden Schwingungsfrequenz zu identifizieren, sofern vorhanden.

Es werden also alle Teilfrequenzbereiche einzeln auf eine oder mehrere Schwingungsfrequenzen untersucht. In diesem Stadium ist häufig noch nicht bekannt, ob überhaupt eine Schwingung in dem jeweiligen Teilfrequenzbereich zu erwarten ist, und daher auch nicht bei welcher Frequenz oder Amplitude sie zu erwarten ist.

Sind nun alle Teilfrequenzbereiche in diesem Sinne untersucht worden, sind also alle in diesen Teilfrequenzbereichen aufgetretenen Schwingungen mit ihren Schwingfrequenzen identifiziert worden, erfolgt eine Gesamtbetrachtung.

Dafür wird vorgeschlagen, in Abhängigkeit von den Frequenzanalysen aller Teilfrequenzbereiche eine zu dämpfende niederfrequente Schwingung als Zielschwingung zu identifizieren. Hier wurde besonders erkannt, dass mehrere Schwingungen mit unterschiedlichen Schwingungsfrequenzen identifiziert werden können, es aber nicht unbedingt zweckmäßig und/oder möglich ist, all diese Schwingfrequenzen zu dämpfen. Hier kommt insbesondere in Betracht, eine Zielschwingung nach der Amplitude der identifizierten Schwingungen auszuwählen. Außerdem ist eine vorgeschlagene Ausgestaltung, eine mögliche Zielschwingung nur aus Schwingungen mit solchen Schwingfrequenzen auszusuchen, die auch gedämpft werden sollen.

Es kommt insbesondere in Betracht, dass ein Frequenzbereich, in dem Schwingungen gedämpft werden sollen, falls sie auftreten, kleiner ist als der insgesamt untersuchte Frequenzbereich. Insbesondere kann bereits das Festlegen des Gesamtfrequenzbereichs so erfolgen, dass dieser über einen solchen Frequenzbereich, in dem Schwingungen gedämpft werden sollen, hinausgeht. Ein Grund kann darin liegen, dass relevante Frequenzen möglicherweise am Rande des Gesamtfrequenzbereichs, insbesondere am Rande eines Teilfrequenzbereichs nicht mehr optimal identifiziert werden können.

Grundsätzlich ist allerdings auch nicht ausgeschlossen, mehr als nur eine zu dämpfende niederfrequente Schwingung als Zielschwingung zu identifizieren. Es wurde aber erkannt, dass häufig nur eine relevante Zielschwingung zu erwarten ist und es ist von Vorteil, sowohl das Erfassen als auch das sich anschließende Dämpfen auf diese Zielschwingung zu konzentrieren.

Nachdem also eine Zielschwingung identifiziert wurde, wird diese wenigstens nach Frequenz und Amplitude erfasst. Das Identifizieren der zu dämpfenden niederfrequenten

Schwingung als Zielschwingung kann bereits das Identifizieren ihrer Frequenz beinhalten. Das kann aber noch ein ungenaues Identifizieren der Frequenz dieser Zielschwingung bedeuten. Dazu wird dann vorgeschlagen, die Zielschwingung nach Frequenz und Amplitude jeweils möglichst genau zu erfassen. Optional kann zusätzlich eine Phase, also Phasenlage der Zielschwingung erfasst werden. Das kann für die durchzuführende Dämpfung hilfreich sein, ist aber nicht unbedingt notwendig, wie nachfolgend noch erkennbar wird.

Weiter wird vorgeschlagen, ein Dämpfungssollsignal in Abhängigkeit von der nach Frequenz und Amplitude und ggf. auch Phase erfassten Zielschwingung zu bestimmen, um die erfasste Zielschwingung zu dämpfen. Ein solches Dämpfungssollsignal weist insbesondere selbst die Frequenz der Zielschwingung auf. Das Einstellen einer Phase des Dämpfungssollsignals ist auch vorteilhaft, um dann ein entsprechendes Dämpfungssignal gemäß dem Dämpfungssollsignal zu erzeugen, das die Zielschwingung auch dämpft und nicht bei falscher Phasenlage anregt. Eine solche Phasenlage des Dämpfungssollsignals und damit dann auch des Dämpfungssignals muss aber nicht unbedingt unmittelbar von einer Phase der erfassten Zielschwingung abhängig eingestellt werden. Stattdessen kann auch, was später noch im Detail beschrieben wird, die erfasste Zielschwingung bzw. ein davon abgeleitetes Signal anderweitig die Phasenlage des Dämpfungssollsignals und damit des Dämpfungssignals beeinflussen. In der Tat ist aber eine Option, dafür die Phase der Zielschwingung zu erfassen und davon abhängig die Phase des Dämpfungssollsignals zu bestimmen.

Allerdings muss ein solches Dämpfungssollsignal nicht unbedingt ein sinusförmiges Signal sein, eine Variante ist aber, dass das Dämpfungssollsignal sinusförmig ist.

Es wird dann vorgeschlagen, ein Einspeisesollsignal in Abhängigkeit von dem Dämpfungssollsignal und in Abhängigkeit von einem Basissollsignal zu erzeugen. Das Einspeisesollsignal ist also eine Vorgabe für ein Einspeisesignal, das insbesondere eine einzuspeisende Blindleistung sein kann, aber auch eine Wirkleistung sein kann, oder beinhalten kann. Das Einspeisesignal soll die Dämpfung umsetzen, aber es können noch weitere Aufgaben für das Einspeisesignal existieren, z.B. eine Spannung zu stützen. Diese weiteren Aufgaben, oder nur eine weitere Aufgabe, werden durch das Basissollsignal vorgegeben. Die vorgesehene Dämpfung und die weiteren Aufgaben werden also in dem Einspeisesollsignal und dann dem Einspeisesignal zusammen berücksichtigt. Das Einspeisesollsignal setzt sich dann insbesondere aus dem Dämpfungssollsignal und dem Basissollsignal zusammen.

Eine Möglichkeit ist, dass das Dämpfungssollsignal oder ein Teil davon, auf das Basissollsignal zum Erzeugen des Einspeisesollsignals aufzuschalten. Das Einspeisesignal setzt sich dann also aus einem Basissignal und dem Dämpfungssignal zusammen. Dafür sind jeweils Sollsignale vorgesehen, also das Einspeisesollsignal für das Einspeisesignal, das Basissollsignal für das Basissignal und das Dämpfungssollsignal für das Dämpfungssignal.

Schließlich erfolgt das Erzeugen und Einspeisen des Einspeisesignals in Abhängigkeit von dem Einspeisesollsignals. Das kann mit Hilfe einer Umrichteranordnung durchgeführt werden.

Besonders kann das Dämpfungssignal eine Blindleistung bzw. ein Blindstrom sein. Zusätzlich kann bereits das Einspeisen einer Blindleistung bzw. eines Blindstroms als Basissignal vorgesehen sein. Hier kommt in Betracht, dass bereits eine spannungsabhängige Blindleistungseinspeisung implementiert ist. Eine solche spannungsabhängige Blindleistungseinspeisung liefert im Wesentlichen eine konstante Blindleistung bzw. einen konstanten Blindstrom, wenn die Netzspannung im Wesentlichen konstant ist. Eine solche spannungsabhängige Blindleistungseinspeisung reagiert, je nach Regelungsgeschwindigkeit, grundsätzlich auf niederfrequente Schwingungen, die dem Basisspannungssignal überlagert sind, mit einer Reaktion, die sogar zu einer Verschlechterung, insbesondere Anregung der Schwingung führen kann.

Genau solche niederfrequenten Schwingungen, oder eine davon, werden nun aber erfasst und insbesondere eine Zielschwingung davon identifiziert. Diese hat meist eine vergleichsweise geringe Amplitude bzw. eine geringe Schwingungsamplitude. Gleichwohl ist es relevant sie zu dämpfen, bevor ihre Amplitude größer wird.

Dafür wird das Dämpfungssollsignal erfasst und auf das Basissollsignal aufgeschaltet. Die Amplitude der Zielschwingung mag im Vergleich zur Amplitude der Netzspannung gering sein, die Netzspannung mag also eine geringe Schwankungshöhe haben, das abgeleitete Dämpfungssollsignal kann aber eine signifikante Amplitude haben, die in der Größenordnung des Basissollsignals liegen kann, oder darüber. Natürlich kann sie auch geringer sein, was auch davon abhängt, wie groß jeweils eine solche spannungsabhängig eingespeiste Blindleistung ist, um bei diesem Beispiel zu bleiben.

Entsprechend wird durch diese Überlagerung ein Einspeisesollsignal bzw. Einspeisesignal geschaffen oder es wird vorgeschlagen, das Einspeisesignal in Abhängigkeit von dem Einspeisesollsignal zu erzeugen und einzuspeisen.

Dadurch kann dann ein Einspeisesignal erzeugt und gesteuert werden, das das Dämpfungssignal beinhaltet und auch ein bereits vorhandenes Basissignal. Insbesondere kann ein dämpfendes Blindleistungssignal bzw. Blindstromsignal auf eine spannungsabhängige Blindleistungseinspeisung bzw. Blindstromeinspeisung abgestimmt werden. Diese gemeinsame Betrachtung verhindert, dass das Dämpfungssignal und das spannungsabhängig erzeugte Basissignal gegeneinander arbeiten.

Gemäß einem Aspekt wird vorgeschlagen, dass das Dämpfungssollsignal eine einzuspeisende Blindleistung beschreibt und insbesondere das Basissollsignal durch Blindleistungssteuerung als Sollsignal für eine einzuspeisende Blindleistung vorgegeben wird. Die Blindleistungssteuerung kann bspw. einen fest vorgegebenen Blindleistungssollwert umsetzen, es kommt aber auch eine netzspannungsabhängige Blindleistungseinspeisung in Betracht. Damit setzt sich dann also auch das Einspeisesignal aus der Blindleistung gemäß Dämpfungssollsignal und aus der Blindleistung gemäß Basissollsignal zusammen.

Hier wurde besonders erkannt, dass die Dämpfung der niederfrequenten Schwingung, oder ggf. mehrerer niederfrequenter Schwingungen mittels eines entsprechenden Blindleistungssignals erfolgt. Damit kann besonders einer Spannungsschwingung entgegengewirkt werden. Es wird vermieden, dass die eingespeiste Wirkleistung variiert wird und dadurch werden mechanische Belastungen der Windenergieanlage durch variierende Wirkleistungsbereitstellung vermieden. Besonders kann eine schwingende Wirkleistungsveränderung zu entsprechend schwingenden mechanischen Belastungen des Generators kommen, die auch auf weitere Teile der Windenergieanlage übertragen werden können. So kann es bspw. zu Schwingungen des Turms kommen, was hierdurch vermieden wird.

Gemäß einem Aspekt wird vorgeschlagen, dass zum Erzeugen des Einspeisesollsignals ein Kernregler vorgesehen ist, der in Abhängigkeit von dem Basissollsignal und dem eingespeisten Einspeisesignal ein Reglerausgangssignal ausgibt, und dass das Einspeisesollsignal in Abhängigkeit von dem Reglerausgangssignal bestimmt wird.

Dazu wird noch vorgeschlagen, dass das Dämpfungssollsignal oder ein Teil davon auf das Basissollsignal aufgeschaltet wird, und dadurch vom Kernregler berücksichtigt wird. Ergänzend oder alternativ wird vorgeschlagen, dass das Dämpfungssollsignal oder ein Teil davon auf das Reglerausgangssignal aufgeschaltet wird, und dadurch das Einspeisesollsignal beeinflusst.

Es ist also ein Kernregler vorgesehen, der synonym auch als innerer Regler oder innerer Regelkreis bezeichnet werden kann. Dieser Kernregler gibt ein Reglerausgangssignal in Abhängigkeit von dem Basissollsignal und dem eingespeisten Einspeisesignal aus. Insbesondere wird ein Soll-/Istwert-Vergleich zwischen Basissollsignal und dem eingespeisten Einspeisesignal gebildet und dieser Soll-/Istwert-Vergleich, also der resultierende Regelfehler, bildet somit das Eingangssignal des Kernreglers. Das ausgegebene Reglerausgangssignal bildet dann die Basis für das Einspeisesollsignal. Im einfachsten Fall entspricht das Einspeisesollsignal dem Reglerausgangssignal.

Bei dem Aspekt, bei dem auf das Reglerausgangssignal das Dämpfungssollsignal oder ein Teil davon aufgeschaltet wird, ergibt sich das Einspeisesollsignal somit als Summe aus dem Reglerausgangssignal und dem Dämpfungssollsignal oder dem Teil davon, der aufgeschaltet wird. Das schließt natürlich nicht aus, dass etwaige andere ergänzende Regelsignale hinzu kommen. In der einfachsten und bevorzugten Ausführungsform ergibt sich das Einspeisesollsignal hier aber ausschließlich aus dem Reglerausgangssignal und dem aufaddierten Dämpfungssollsignal. Da das Dämpfungssollsignal insbesondere ein sinusförmiges Signal sein kann, kann es je nach Phasenlage natürlich auch abgezogen werden.

Auch bei diesen Aspekten ist insbesondere vorgesehen, dass das Basissollsignal, das Dämpfungssollsignal und entsprechend auch das resultierende Einspeisesollsignal jeweils ein Sollsignal für eine Blindleistung sind.

So kann das Basissollsignal ein Blindleistungssollsignal sein, das eine spannungsabhängige Blindleistungssteuerung ausgegeben oder vorgegeben hat. Dieses Basissollsignal, das insbesondere auch bei deaktivierter Schwingungsdämpfung von einer solchen spannungsabhängigen Blindleistungssteuerung vorgegeben werden würde, soll mithilfe des Kernreglers möglichst gut umgesetzt werden. Dafür erfolgt der Soll-/Istwert-Vergleich zwischen dem Basissollsignal und dem Einspeisesignal, also der tatsächlich eingespeisten Blindleistung und führt zu einem Regelfehler. In Abhängigkeit von diesem Regelfehler gibt der Kernregler das Reglerausgangssignal aus.

Das Reglerausgangssignal ist dann selbst wieder ein Blindleistungssollwert. Ein solcher Kernregler, der der innerste Regler einer entsprechenden Reglerkaskade sein kann, regelt insbesondere Abweichungen aus, die durch den umsetzenden Umrichter erfolgen, oder durch den Einfluss von Leitungen und/oder Transformatoren bedingt sind. Insbesondere Übertragungsleitungen von einer Windenergieanlage zu einem Netzanschlusspunkt, besonders dann, wenn die Windenergieanlage Teil eines Windparks ist, können hier relevant sein.

Vereinfacht ausgedrückt wird durch diesen Kernregler das Basissollsignal so modifiziert, dass, dass es Veränderungen durch die Umsetzung durch Umrichter und Einflüsse von Leitungen und Transformatoren kompensiert. Durch die Verwendung eines Reglers braucht die genaue Dynamik von Umrichtern, Leitungen und Transformatoren nicht bekannt zu sein.

Im Fall der spannungsabhängigen Blindleistungseinspeisung wird dadurch also erreicht, dass trotz der Abweichung bei der Umsetzung und Übertragung genau die Blindleistung eingespeist wird, die die spannungsabhängige Blindleistungssteuerung anfangs als Blindleistungssollwert vorgegeben hat.

Zu einer solchen Blindleistungsregelung, oder anderen Regelung eines Basissollsignals, kommt nun die Umsetzung des Dämpfungssollsignals hinzu.

Im einfachsten Fall wird das Dämpfungssollsignal auf das Basissollsignal aufgeschaltet. Das Ergebnis wird mit dem Istwert des Einspeisesignals verglichen und der so entstehende Regelfehler wird durch den Kernregler in ein modifiziertes Sollsignal, also in das Reglerausgangssignal umgewandelt. Dadurch kann eine Aufschaltung des Dämpfungssollsignals im Grunde auf einfache Art und Weise realisiert werden.

Es ist aber zu beachten, dass das Dämpfungssollsignal insbesondere als sinusförmiges Signal ausgebildet sein kann und das führt dazu, dass der Kernregler, der ohne dieses Dämpfungssollsignal im Wesentlichen für ein stationäres Signal ausgelegt ist, ständig ein oszillierendes Signal nachregeln muss. Das kann durch den Kernregler zu einer Phasenverschiebung dieses schwingenden Anteils führen, denn für das Ausregeln eines solchen sinusförmigen Signals ist er ursprünglich nicht ausgelegt.

Er könnte natürlich entsprechend angepasst werden. Das Ausregeln eines sinusförmigen Signals, das hier eine Frequenz von einigen Hertz aufweisen kann, kann aber immer problematisch sein. Es kommt hinzu, dass der Kernregler insbesondere einen integralen Anteil aufweisen kann, da er für die Anwendung ohne aufgeschaltetem sinusförmigen Dämpfungssignal besonders eine stationäre Genauigkeit erreichen soll. Ein solcher integraler Anteil kann aber für die Ausregelung eines schwingenden Signals ungünstig sein, zumindest nicht optimal arbeiten.

Daher kann eine Möglichkeit sein, das Dämpfungssollsignal auf das Reglerausgangssignal aufzuschalten, also am Ausgang des Kernreglers. Der Kernregler kann dann weiterhin, also im Grunde wie für den Fall, wenn kein Dämpfungssollsignal aufgeschaltet wird, eine stationäre Genauigkeit für das Basissollsignal ausregeln. Auf das sich so ergebende Reglerausgangssignal wird dann das oszillierende Dämpfungssollsignal aufgeschaltet, das dadurch den Kernregler nicht durchlaufen muss. Abweichungen durch Umrichter und Einflüsse von Leitungen und Transformatoren können für das Dämpfungssignal zwar dann nicht ausgeregelt werden, das kann aber hinnehmbar sein. Besonders sind für das Dämpfungssignal Frequenz- und Phasenlage wichtig. Etwaige Abweichungen der Amplitude sind eher von geringerer Bedeutung. Eine Phasenverschiebung kann anderweitig, besonders beim Erzeugen des Dämpfungssollsignals, berücksichtigt werden.

Ein solches Verfahren funktioniert somit auch recht gut, es kann aber einen Nachteil haben. Das so aufgeschaltete oszillierende Dämpfungssignal wird nämlich entsprechend umgesetzt, sodass auch die eingespeiste Blindleistung diesen schwingenden Anteil aufweist, denn genau das soll erreicht werden. Dieses eingespeiste Einspeisesignal, also insbesondere die eingespeiste Blindleistung, mit dem oszillierenden Anteil, wird aber zurückgeführt zu einem Soll-/Istwert-Vergleich mit dem Basissollwert. Dadurch erhält der Regelfehler dann doch wieder einen oszillierenden Anteil und damit hat der Kernregler doch ein Eingangssignal mit oszillierendem Anteil.

Je nach Geschwindigkeit und Reglerverstärkung kann ein solcher Einfluss aber hinnehmbar sein. Er kann aber auch zu einem störenden oszillierenden Anteil auf dem Reglerausgangssignal führen. Das kann dann das dort am Reglerausgang aufgeschaltete Dämpfungssignal verfälschen oder abschwächen.

Somit wird gemäß einem Aspekt vorgeschlagen, dass eingangsseitig des Kernreglers ein von dem Dämpfungssollsignal abhängiges Dämpfungskompensationssignal aufgeschaltet wird, insbesondere auf das Basissollsignal aufgeschaltet wird, um einen Einfluss des Dämpfungssollsignals über das rückgeführte Einspeisesignal auf den Kernregler zumindest teilweise zu kompensieren.

Es liegt hier besonders der Gedanke zu Grunde, das erfasste und rückgeführte Einspeisesignal um das Dämpfungssignal zu bereinigen. Es kann dann ein Sollistwertvergleich zwischen Basissollwert und erfasstem, rückgeführten Einspeisesignal durchgeführt werden, bei dem sich ein um das Dämpfungssignal bereinigter Regelfehler bzw. Regelabweichung ergibt, sodass ein entsprechend um das Dämpfungssignal bereinigter Regelfehler in den Kernregler eingegeben wird. Wegen der linearen Verknüpfung beim Bilden des Regelfehlers ist es nicht von Bedeutung, wo genau der Kompensationssignalanteil zur Bereinigung aufgeschaltet wird, insbesondere, ob das Aufschalten mit entsprechendem Vorzeichen zur Bereinigung auf dem Basissollwert, dem zurückgeführten Einspeisesignal, oder auf dem Regelfehler erfolgt.

Hier liegt zudem die Erkenntnis zu Grunde, dass ungefähr, aber nicht genau vorhersehbar und vorbestimmbar ist, zu was für einem Schwingungsanteil das Dämpfungssollsignal auf dem Einspeisesignal führt. Hier kann auch zumindest teilweise der angesprochene Einfluss des Umrichters und der Leitungen und Transformatoren berücksichtigt werden. Mit anderen Worten ist das dem tatsächlich eingespeisten Einspeisesignal überlagerte oszillierende Signal nicht unbedingt identisch mit dem zuvor aufgeschalteten Dämpfungssollsignal. Entsprechend kann ein Signal generiert werden, das etwa dem resultierenden oszillierenden, dem Einspeisesignal überlagerten Teilsignal entspricht. Dies wird auf das rückgeführte Einspeisesignal mit umgekehrten Vorzeichen aufgeschaltet, um so im Wesentlichen dieses überlagerte Teilsignal zu kompensieren. Im Idealfall erfolgt dann ein Soll-/Istwert-Vergleich zwischen dem Basissollsignal und dem um dieses überlagerte schwingende Teilsignal bereinigten Einspeisesignal.

Natürlich kommt auch in Frage, dass ein solches Kompensationssignal auf den Regelfehler zur Kompensation aufgeschaltet wird, also nach dem Soll-/Istwert-Vergleich statt vor dem Soll-/Istwert-Vergleich, was bei entsprechender Berücksichtigung des Vorzeichens zum selben Ergebnis führt.

Gemäß einem Aspekt wird vorgeschlagen, dass eingangsseitig des Kernreglers, der in Abhängigkeit von dem Basissollsignal und dem eingespeisten Einspeisesignal ein Reglerausgangssignal ausgibt, das Dämpfungskompensationssignal aufgeschaltet wird, insbesondere auf das Basissollsignal aufgeschaltet wird. Dabei wird das Dämpfungskompensationssignal durch Herausfiltern eines Kompensationssignalanteils aus dem erfassten Einspeisesignal erzeugt. Der Kompensationssignalanteil weist eine Schwingungsfrequenz der identifizierten Zielschwingung auf und das Dämpfungskompensationssignal wird in Abhängigkeit von dem Kompensationssignalanteil gebildet. Insbesondere kann das Dämpfungskompensationssignal dem Kompensationssignalanteil entsprechen.

Der Filter wird also so eingestellt, dass er einen Signalanteil mit der Schwingungsfrequenz der identifizierten Zielschwingung herausfiltert. Dadurch kann erreicht werden, dass im Wesentlichen das Dämpfungssignal als Kompensationssignalanteil herausgefiltert wird, aber mit veränderter Amplitude und Phasenlage im Vergleich zum Dämpfungssollsignal.

Der so herausgefilterte Kompensationssignalanteil kann im Idealfall direkt als Dämpfungskompensationssignal verwendet werden. Es kommt aber auch eine Anpassung der Amplitude und/oder der Phase in Betracht, wenn der Kompensationssignalanteil in das Dämpfungskompensationssignal gewandelt wird. Es kommt auch in Betracht, das Aufschalten des Dämpfungskompensationssignals oder das Weiterverarbeiten des Kompensationssignalanteils von Kriterien wie einer Amplitude des Dämpfungssollsignals abhängig zu machen.

Besonders kann zum Herausfiltern des Dämpfungskompensationssignals aus dem erfassten Einspeisesignal ein Bandpassfilter verwendet und auf die Schwingungsfrequenz der identifizierten Zielschwingung eingestellt werden. Der Bandpassfilter lässt also im Wesentlichen nur Signale mit der Schwingungsfrequenz der identifizierten Zielschwingung durch.

Auch hier liegt der Gedanke zu Grunde, das erfasste und rückgeführte Einspeisesignal um das Dämpfungssignal zu bereinigen.

Gemäß einem Aspekt wird vorgeschlagen, dass wenigstens drei überlappende Teilfrequenzbereiche vorgesehen sind. Insbesondere sind wenigstens vier, wenigstens fünf oder wenigstens sechs Teilfrequenzbereiche vorgesehen.

Hier wurde besonders erkannt, dass die Frequenzanalyse des Netzsignals für jeden Teilfrequenzbereich umso besser ist, je enger der Frequenzbereich gewählt wird. Insbesondere legt die untere Bereichsfrequenz jedes Teilfrequenzbereichs die Mindestzeitdauer fest, über die das Signal hier aufgenommen und ausgewertet werden muss. Die untere Bereichsfrequenz begrenzt also die Geschwindigkeit der Auswertung.

Die obere Bereichsfrequenz legt aber eine Mindestabtastfrequenz fest, die auch synonym als Abtastrate bezeichnet werden kann, und außerdem sollten auch hohe Frequenzen möglichst schnell erfasst werden. Die untere und obere Bereichsfrequenz eines jeden Teilfrequenzbereichs stehen somit in einem gewissen Widerspruch und daherwird vorgeschlagen, die Teilfrequenzbereiche möglichst klein zu wählen. Dabei wurde auch erkannt, dass das Wählen kleinerer Teilfrequenzbereich und damit die Verwendung einer größeren Anzahl von Teilfrequenzbereichen nicht unbedingt zu einer entsprechend höheren benötigten Rechenkapazität führen muss. Durch eine gute Anpassung der Messdauer und Abtastfrequenz kann der Rechenaufwand entsprechend kleingehalten werden.

Gemäß einem Aspekt wird vorgeschlagen, dass die obere Bereichsfrequenz eines Teilfrequenzbereichs im Bereich von 1,5-fachen bis 10-fachen Wert der unteren Bereichsfrequenz desselben Teilfrequenzbereichs liegt. Insbesondere wird vorgeschlagen, dass die obere Bereichsfrequenz eines Teilfrequenzbereichs im Bereich vom doppelten bis dreifachen Wert der unteren Bereichsfrequenz desselben Teilfrequenzbereichs liegt. Dadurch kann eine gute Anpassung der Teilfrequenzbereiche erfolgen. Das hat im Grunde die gleichen Vorteile, die vorstehend zu dem Aspekt erläutert wurden, wenigstens drei überlappende Teilfrequenzbereiche vorzusehen, insbesondere wenigstens vier, fünf oder sechs Teilfrequenzbereich vorzusehen.

Besonders wurde auch erkannt, dass bereits mit dem zweifachen Wert der oberen Bereichsfrequenz gegenüber der unteren Bereichsfrequenz und mit einer Wahl von vier Teilfrequenzbereichen ein Frequenzspektrum von 1Hz bis 16Hz, oder bspw. von 0,5Hz bis 8Hz abgedeckt werden kann. Bei einer geringen Überlappung kann dann bspw. ein Bereich von 0,5 - 5Hz abgedeckt werden. Dabei wurde auch erkannt, dass zur Berücksichtigung relevanter niederfrequenter Schwingungen im elektrischen Versorgungsnetz die Abdeckung eines solchen Frequenzbereichs von bspw. 0,5 - 5Hz ausreichend sein kann.

Gemäß einem Aspekt wird vorgeschlagen, dass die jeweilige Frequenzanalyse für jeden Teilfrequenzbereich unterschiedliche Zeitausschnitte des erfassten Netzsignals verwendet und unterschiedliche Abtastraten aufweist. Dadurch kann die Frequenzanalyse für jeden Teilfrequenzbereich gut angepasst werden. Besonders ist es möglich, einen Zeitausschnitt so klein wie möglich zu wählen. Ein solcher möglichst kleiner Zeitausschnitt ist aber durch die untere Bereichsfrequenz des jeweiligen Teilfrequenzbereichs festgelegt, sodass die Wahl möglichst kurzer Zeitabschnitte dazu führt, dass sie je Teilfrequenzbereich unterschiedlich sind.

Grundsätzlich wäre eine möglichst hohe Abtastrate wünschenswert. Unter Berücksichtigung vorhandener Rechenkapazitäten, um auch möglichst schnell zu einem Analyseergebnis zu kommen, sollte die Abtastrate aber nicht zu hoch gewählt werden. Insbesondere wird vorgeschlagen, dass für jeden Teilfrequenzbereich und damit für den jeweiligen Zeitausschnitt des erfassten Netzsignals, der bei dem betreffenden Teilfrequenzbereich zu Grunde gelegt wird, gleich viele Abtastungen durchgeführt werden. Dadurch ergibt sich bei größeren Zeitausschnitten, also bei Teilfrequenzbereichen mit niedrigeren unteren Bereichsfrequenzen eine geringere Abtastrate.

Die Anzahl von Abtastungen pro Zeitausschnitt wird also vorzugsweise für die Teilfrequenzbereiche jeweils gleich oder ähnlich gewählt. Der erläuterte Vorteil ergibt sich aber natürlich nicht nur, wenn diese Anzahl von Abtastungen pro Zeitausschnitt immer exakt gleich groß ist.

Insbesondere wird vorgeschlagen, dass jedem Teilfrequenzbereich ein Zeitausschnitt des Netzsignals zur Auswertung zugeordnet wird, wobei sich Zeitausschnitte mehrerer Teilfrequenzbereiche überschneiden können, und der Zeitausschnitt umso größer ist, je kleiner die untere Bereichsfrequenz des zugeordneten Teilfrequenzbereichs ist, und/oder jedem Teilfrequenzbereich zum Durchführen der Frequenzanalyse eine Abtastrate zugeordnet ist, die umso größer ist, je größer die obere Bereichsfrequenz des Teilfrequenzbereichs ist. Außerdem oder alternativ wird vorgeschlagen, dass eine Anzahl von Abtastungen pro Zeitausschnitt verwendet wird, die für unterschiedliche Teilfrequenzbereiche, insbesondere für alle Teilfrequenzbereich, gleich ist.

Ein Zeitausschnitt des Netzsignals ist also ein Abschnitt des Netzsignals, der jeweils analysiert wird. Er ist für unterschiedliche Teilfrequenzbereiche unterschiedlich lang. Die Auswertung der Teilfrequenzbereiche erfolgt möglichst, also auch bevorzugt, in einer Online-Berechnung. Entsprechend erfolgt natürlich auch die Analyse für alle Teilfrequenzbereiche parallel bzw. zeitgleich. Entsprechend sind die jeweiligen Zeitausschnitte zwar unterschiedlich lang, treten aber zugleich auf, soweit sie jedenfalls überschneidend sind. Insbesondere können die Zeitausschnitte als gleitende Fenster realisiert werden. Dann könnten die jeweils aktuellen Zeitausschnitte jedes Teilfrequenzbereichs denselben Endzeitpunkt haben, der sich wiederum ständig erneuert. Entscheidend ist also die Wahl der Länge des Zeitausschnitts. Die Länge des Zeitausschnitts orientiert sich also an der unteren Bereichsfrequenz. Hierdurch kann erreicht werden, dass für die unterschiedlichen Teilfrequenzbereiche zeitgleich eine Aktualisierung der Auswertung bzw. Berechnung durchgeführt wird. Von einem solchen Aktualisierungszeitpunkt reichen die unterschiedlich langen Zeitfenster unterschiedliche weit zurück, sodass die Endzeitpunkte, also meist etwa der aktuelle Zeitpunkt, gleich sind, der Startzeitpunkte aber unterschiedlich.

Die Abtastrate kann sich an der Größe des Zeitausschnitts orientieren und sich insbesondere daraus ergeben, dass eine feste Anzahl von Abtastungen pro Zeitausschnitt vorgegeben wird. Außerdem oder alternativ kann sich die Abtastrate aber auch an der oberen Bereichsfrequenz orientieren. Immerhin muss die Abtastrate so groß gewählt werden, dass auch die höchste noch in dem jeweiligen Teilfrequenzbereich zu analysierende Schwingfrequenz mit einer ausreichend hohen Abtastrate abgetastet wird.

Insbesondere wird vorgeschlagen, dass die Dauer des Zeitausschnitts des Teilfrequenzbereichs wenigstens dem halben, insbesondere wenigstens dem ganzen Kehrwert der unteren Bereichsfrequenz entspricht. Mit anderen Worten entspricht die Dauer des Zeitausschnitts des Teilfrequenzbereichs wenigstens einer halben Periodendauer. Es wurde erkannt, dass die halbe Periodendauer eines Signals ausreichen kann, dieses zu identifizieren. Insbesondere wird aber vorgeschlagen, wenigstens eine ganze Periodendauer zu verwenden, um auch Standard DFT-Analysen anwenden zu können. Insbesondere wird vorgeschlagen, für die Frequenzanalyse eine DFT zu verwenden. Dadurch ist es möglich, auszuwählen, welche Spektrallinien gerechnet / berücksichtigt werden sollen. Dadurch können erwartete und/oder interessierenden Spektrallinien, und damit Frequenzen, gezielt zur Berücksichtigung ausgewählt werden.

Außerdem oder alternativ wird vorgeschlagen, dass die Dauer des Zeitausschnitts maximal dem fünffachen Kehrwert der unteren Bereichsfrequenz entspricht. Es wird also vorgeschlagen, maximal über eine fünffache Periodendauer der längsten Periode die Analyse durchzuführen. Grundsätzlich kann eine Analyse auch länger dauern, es ist aber zu berücksichtigen, dass das Ergebnis der Analyse möglichst frühzeitig vorliegen sollte. Durch Wahl eines zu langen Zeitausschnitts ergebe sich damit eine zu lange Analysedauer, was durch das Festsetzen des oberen Werts des Zeitausschnitts vermieden wird.

Außerdem oder alternativ wird vorgeschlagen, dass die Abtastrate jeweils eines Teilfrequenzbereichs wenigstens der doppelten, insbesondere wenigstens der fünffachen oberen Bereichsfrequenz entspricht. Dadurch ist gewährleistet, dass selbst für Signale der oberen Bereichsfrequenz eine ausreichend hohe Abtastung durchgeführt wird. Eine technische Untergrenze bildet jeweils eine doppelte Abtastrate einer Frequenz. Durch den fünffachen Wert wird aber eine wesentlich verbesserte Analyse erreicht, die nicht nur theoretisch, sondern auch im praktischen Vorgehen eine ausreichende Abtastung erreicht.

Außerdem oder alternativ wird vorgeschlagen, dass die Abtastrate jeweils eines Teilfrequenzbereichs höchstens der 100fachen, insbesondere höchstens der 50fachen oberen Bereichsfrequenz entspricht. Grundsätzlich könnte die Abtastrate beliebig hoch gewählt werden, aus praktischen Gründen wurde aber erkannt, dass für eine zu hohe Abtastrate eine zu hohe Rechenleistung benötigt wird. Hier wurde besonders auch berücksichtigt, dass sich die Abtastrate zwar an der oberen Bereichsfrequenz orientiert, die untere Bereichsfrequenz aber die Messdauer festlegt bzw. beeinflusst. Es wird hier also eine Lösung vorgeschlagen, bei derfürdie untere Bereichsfrequenz ausreichend lange gemessen wird, für die obere Bereichsfrequenz ausreichend häufig abgetastet wird und all dies auch in möglichst kurzer Zeit auswertbar ist.

Gemäß einem Aspekt wird vorgeschlagen, dass dann, wenn in einem ersten der Teilfrequenzbereiche mit einer höheren oberen Bereichsfrequenz als wenigstens ein weiterer der Teilfrequenzbereiche eine Schwingung mit einer Schwingfrequenz erkannt wurde, diese Schwingfrequenz als potentielle Aliasingfrequenz berücksichtigt wird. Für die Frequenzanalyse von wenigstens einem zweiten der Teilfrequenzbereiche mit kleinerer oberer Bereichsfrequenz als beim ersten Teilfrequenzbereich wird dann ein gefiltertes Signal des Netzsignals verwendet wird. Aus diesem gefilterten Signal werden Signalanteile mit der Aliasingfrequenz herausgefiltert.

Hier wird berücksichtigt, dass die Teilfrequenzbereiche Schwingungen unterschiedlicher Schwingfrequenz erkennen können. Wird also eine Schwingung mit hoher Frequenz in einem Teilfrequenzbereich mit hoher oberer Bereichsfrequenz erkannt, tritt sie dennoch in Teilfrequenzbereichen mit niedrigerer oberer Bereichsfrequenz auf, denn sie tritt natürlich im gesamten aufgenommenen Netzsignal auf. In solchen Teilfrequenzbereichen mit niedrigerer oberer Bereichsfrequenz können sie u.U. aber nicht identifiziert werden, denn die an den jeweiligen Teilfrequenzbereich angepasste Frequenzanalyse, besonders die Abtastrate, ist für solche Frequenzen nicht ausgelegt.

Deswegen kann eine solche höherfrequente Schwingung in einem Teilfrequenzbereich mit niedrigerer oberer Bereichsfrequenz zu einem Aliasingeffekt führen. Es kann nämlich sein, dass die Abtastrate in diesem Teilfrequenzbereich mit niedrigerer oberer Bereichsfrequenz zum Identifizieren dieser höherfrequenten Schwingung zu gering ist.

Um hier Abhilfe zu schaffen, wird gezielt eine solche Schwingung höherer Schwingfrequenz für die Analyse des Testsignals in Teilfrequenzbereichen mit niedrigerer oberer Bereichsfrequenz herausgefiltert. Hier wurde besonders erkannt, dass ein gezieltes Herausfiltern einer identifizierten Schwingung bzw. Frequenz ansonsten ohne starke Beeinflussung des verbleibenden Signals durchgeführt werden kann. Ein solcher gezielter Filter verfälscht das Signal also wesentlich weniger, als bspw. ein Tiefpassfilter, der generell jegliche hohe Frequenzen herausfiltern könnte.

Gemäß einem Aspekt wird vorgeschlagen, dass in einem ersten Analyseschritt für jeden Teilfrequenzbereich die Frequenzanalyse durchgeführt wird, um wenigstens eine Schwingung mit einer ersten Frequenz zu identifizieren. Dazu wird weiter vorgeschlagen, in einem zweiten Analyseschritt Frequenz, Amplitude und optional Phase der im ersten Analyseschritt identifizierten Schwingung durch eine auf die identifizierte Schwingung angepasste Signaluntersuchung zu identifizieren. Insbesondere wird vorgeschlagen, dass die angepasste Signaluntersuchung der identifizierten Schwingung gegenüber der Frequenzanalyse, die die Schwingung im ersten Analyseschritt identifiziert hat, eine höhere Auflösung aufweist und/oder gezielt auf die im ersten Analyseschritt identifizierte erste Frequenz abgestimmt ist.

Hier wurde besonders erkannt, dass jeweils eine Frequenzanalyse in einem Teilfrequenzbereich immer noch einen vergleichsweise großen Frequenzbereich abdecken muss. Mit anderen Worten ist zu Beginn nicht klar, ob überhaupt eine Schwingung vorliegt, und falls eine vorliegt, welche Frequenz sie aufweist. Es muss also der gesamte Frequenzbereich des jeweiligen Teilfrequenzbereichs nach einer Schwingung abgesucht werden.

Bspw. kann in einem Teilfrequenzbereich, der von 1Hz bis 2Hz reicht, eine Schwingung mit einer Frequenz von 1,23Hz vorliegen, um ein einfaches anschauliches Beispiel zu wählen. Die Analyse führt aber möglicherweise in einem ersten Analyseschritt nur dazu, dass eine Schwingung mit einer Frequenz von 1,2Hz erkannt wird. Die genaue Frequenz konnte dabei noch nicht erkannt werden.

Diese Kenntnis der Schwingung mit einer Frequenz von etwa 1,2 Hz kann dann für den zweiten Analyseschritt verwendet werden. Die Analyse wird dann so ausgeführt, dass sie gezielt auf den Bereich um 1,2Hz fokussiert. Es ist nun bereits bekannt, dass eine Schwingungen mit einer Frequenz bspw. unter 1,1Hz und über 1,3Hz nicht vorliegen. Es kann nun also sehr genau die Schwingung in diesem Frequenzbereich von 1,1Hz bis 1,3Hz untersucht werden.

Besonders wird in einem so genauer abgegrenzten Frequenzbereich, also in dem Beispiel im Bereich von 1,1Hz bis 1,3Hz, eine höhere Auflösung und/oder eine gezielte Abstimmung auf diese erste Frequenz von 1,2Hz vorgenommen.

Eine Möglichkeit einer solchen Verfeinerung besteht darin, dass eine Analyse mittels einer DFT durchgeführt wird und die DFT nach einer ersten Eingrenzung einer Schwingungsfrequenz wiederholt wird. Bei einer DFT können zu untersuchende Spektrallinien ausgewählt werden und eine solche Auswahl erfolgt somit für den zweiten Durchgang in Abhängigkeit vom Ergebnis der ersten Untersuchung.

Bspw. kann ein Fenster mit einer Dauer (Fensterlänge) von 50s, verwendet werden, für das 50 Punkte vorgesehen sind. Die Länge gibt bei DFT die Frequenzauflösung vor, in diesem Fall also 1/50 Hz. Daher können die Spektrallinien mit einer Auflösung von 1/50 Hz gerechnet werden, bis zu einer maximalen Frequenz, die von der Zeitauflösung abhängt. In diesem Bsp. ergibt sich: 50s/50 Punkte = 1s, und daher 1/1s = 1Hz als max Frequenz: Die Untersuchung kann also einen Bereich von DC-1Hz abdecken, mit einer Auflösung von 50 Werten. Wenn bei der ersten Iteration z.B. 0,8Hz auftreten, kann man zunächst nicht mehr genauer werden, weil die Schrittweite festgelegt ist, weil nicht erneut gemessen wird. Durch eine weitere Messung, insbesondere parallele Messung mit höherer Auflösung kann die Analyse dann verbessert werden.

Eine Möglichkeit besteht auch darin, das zu untersuchende Signal mit einem sinusförmigen Referenzsignal zu multiplizieren. Dabei wird der Phasenwinkel des Referenzsignals durch m-Iterationen in einer Schleife im kompletten Bereich, also für 0 bis 2π bzw. 0° bis 360° geändert. Des Weiteren wird die Frequenz des Referenzsignals in einer weiteren Schleife durch n-Iterationen im zu untersuchenden Frequenzbereich geändert.

Genau hier kann die erhöhte Auflösung ansetzen, wenn nämlich der zu untersuchende Frequenzbereich aufgrund der im ersten Analyseschritt gefundenen Schwingung sehr stark eingegrenzt ist. In dem genannten Beispiel ist der Frequenzbereich also von anfänglich 1Hz bis 2Hz auf nun 1,1Hz bis 1,3Hz eingeschränkt. Jedenfalls ergeben sich m × n Produkte. Die Frequenz und der Phasenwinkel, bei denen der Gleichanteil des Produkts am höchsten ist, können als die Frequenz und der Phasenwinkel der niederfrequenten Schwingung angenommen werden. Sind die Frequenz und der Phasenwinkel identifiziert, kann auch der Betrag der niederfrequenten Schwingung ermittelt werden. Eine Berechnung kann besonders so durchgeführt werden, wie es in der deutschen Offenlegungsschrift DE 102018120768 A1 beschrieben ist, nämlich zu den Figuren 3 und 4, in den Absätzen [0059] bis [0098].

Gemäß einem Aspekt wird vorgeschlagen, dass zum Bestimmen des Dämpfungssollsignals ein Eingangssignal, das dem aufgenommenen Netzsignal entspricht oder davon abgeleitet ist, mit einem Bandpassfilter gefiltert wird. Dazu wird weiter vorgeschlagen, dass der Bandpassfilter in Abhängigkeit von der identifizierten Zielschwingung eingestellt wird, um aus dem Eingangssignal einen Signalanteil mit der Schwingungsfrequenz der identifizierten Zielschwingung passieren zu lassen, um nur die Zielschwingung aus dem Eingangssignal als extrahierte Netzschwingung passieren zu lassen. Dazu wird weiter vorgeschlagen, die extrahierte Netzschwingung in das Dämpfungssollsignal umzuformen.

Hier liegt also besonders der Gedanke zu Grunde, basierend auf der identifizierten Zielschwingung einen Bandpassfilter gezielt einzustellen. Hier liegt das Konzept zu Grunde, dass der Schwingungsanteil der Zielschwingung in dem Netzsignal zunächst unmittelbar weiterverwendet wird. Der gezielt angepasste Bandpassfilter filtert also - anschaulich gesprochen - alles heraus, was nicht die Schwingungsfrequenz der identifizierten Zielschwingung aufweist. Das Ergebnis ist dann eine möglichst gut aus dem Netzsignal extrahierte Zielschwingung, die in das Dämpfungssollsignal umgewandelt wird.

Es ist zu bemerken, dass es vorteilhaft ist, statt dem aufgenommenen Netzsignal ein Eingangssignal zu verwenden, das von dem Netzsignal abgeleitet wurde. Besonders wird vorgeschlagen, eine Differenz zwischen der Amplitude eines berechneten Raumzeigers und einem Nennspannungswert als Eingangssignal zu verwenden. Dazu kann von den drei Leiter-Erde-Spannung der Raumzeiger berechnet, und davon die Amplitude genommen werden. Nach oder als Teil einer solchen Transformation wird dann die Nennspannung, also ein fester Wert, von der Amplitude des Raumzeigers abgezogen. Hier liegt die Erkenntnis zu Grunde, dass das tatsächliche Netzspannungssignal, also das 50Hz- oder 60Hz-Signal, gegenüber der identifizierten Zielschwingung in der Amplitude dominiert. Durch diese Differenzbildung kann somit ein sehr großer Signalanteil, der aufgrund der künstlichen Vorgabe die Zielschwingung nicht enthalten kann, aus dem Netzsignal bereits herausgenommen werden. Das so erzeugte Eingangssignal weist also im Wesentlichen nur noch Anteile auf, die zu überlagerten Schwingungen gehören.

Jedenfalls wird darauf basierend eine Netzschwingung extrahiert, die nur eine Schwingung mit der einen Frequenz der identifizierten Zielschwingung aufweist. Natürlich könnte auch auf die gleiche Art und Weise noch eine zweite Netzschwingung extrahiert werden. Vorzugsweise konzentriert sich das Verfahren aber darauf, eine einzige Netzschwingung zu extrahieren.

Die Umwandlung der Netzschwingung in das Dämpfungssollsignal ist im Idealfall, wenn reine Blindleistung aufgeschaltet wird, eine Verstärkung und eine Verschiebung um 180°. Vorzugsweise betrifft sie aber insbesondere das Transformieren in die physikalische Einheit des Dämpfungssollsignals, also insbesondere in ein Dämpfungssollsignal, das eine einzuspeisende Blindleistung vorgibt. Dabei kann auch eine Amplitude des Dämpfungssollsignals eingestellt werden. Das Umformen kann auch beinhalten, eine Phasenverschiebung vorzusehen, damit das Dämpfungssollsignal bzw. das zu erzeugende Dämpfungssignal die identifizierte Zielschwingung tatsächlich auch dämpft und nicht verstärkt. Hierbei kann die Netzschwingung in ihrer Amplitude auf Nennspannung normiert sein und das Dämpfungssignal auf Nennblindleistung. Die Verstärkung kann auch kleiner als eins sein.

Ein Gedanke der vorgeschlagenen Lösung, also ein ganz genereller Gedanke, besteht darin, dass nicht eine Netzschwingung identifiziert wird, z.B. nach Frequenz, Phase und Amplitude, und davon abhängig dann ein Dämpfungssollsignal erzeugt wird, in dem ebenfalls wieder Frequenz, Phase und Amplitude vorgegeben werden, sondern, dass die extrahierte Netzschwingung, also ein extrahiertes Netzschwingungssignal unmittelbar in das Dämpfungssollsignal umgewandelt wird. Das Dämpfungssollsignal verändert sich dann also auch sofort, wenn sich das extrahierte Netzschwingungssignal verändert. Das extrahierte Netzschwingungssignal wird also quasi immer aktuell basierend auf dem aktuell eingegebenen Netzsignal erzeugt.

Das hat besonders den Vorteil, dass die vorgeschaltete Netzschwingungsidentifizierung im Grunde zu keiner Verzögerung führt, denn diese wird im Wesentlichen dafür verwendet, den Bandpassfilter präzise einzustellen, mit dem letztlich das Netzschwingungssignal aus dem Eingangssignal extrahiert wird.

Hier liegt auch die Erkenntnis zu Grunde, dass die Zielschwingung sich verändern kann, diese Veränderungen aber in der Amplitude und Phase zu erwarten sind, nicht aber in der Frequenz der Zielschwingung. Besonders wurde erkannt, dass solche Zielschwingungen, die also besonders als subsynchrone Schwingungen bezeichnet werden können, auf Resonanzeigenschaften beruhen, die durch physikalische Charakteristika besonders mechanische Eigenfrequenzen bedingt sein können. Diese können weitere, im elektrischen Versorgungsnetz angeschlossene Teilnehmer, besonders Kraftwerke, beeinflussen. Dadurch kann es zu einer weiteren Anregung oder Verstärkung von Schwingungen kommen. Eine solche im Grunde physikalisch vorgegebene Resonanz ist üblicherweise in ihrer Frequenz praktisch nicht veränderbar. Erst eine Hardwareveränderung, also z.B. geänderte Schaltungen im elektrischen Versorgungsnetz, insbesondere Ab- oder Zuschaltungen von großen Verbrauchern oder Erzeugern, können eine Änderung hervorrufen. Amplituden können sich allerdings leichter ändern, wie auch Phasenverschiebungen.

Diese Erkenntnis wird sich in der vorgeschlagenen Lösung zunutze gemacht, indem sich die Identifizierung auf die Frequenz konzentriert, dadurch die Zielschwingung extrahiert wird, und alle anderen Eigenschaften, insbesondere Amplitude und Phase, durch die so extrahierte Zielschwingung immer aktuell sind und im Grunde bis zum Dämpfungssignal durchgeschleift werden.

Gemäß einem Aspekt wird vorgeschlagen, dass zum Umformen der extrahierten Netzschwingung in das Dämpfungssollsignal wenigstens eines der folgenden Umformelemente verwendet wird.

Als ein Umformelement kann ein Tiefpassfilter verwendet werden, um einen Rauschanteil aus der extrahierten Netzschwingung herauszufiltern. Die extrahierte Netzschwingung ist ihrerseits natürlich auch ein Signal, das hier synonym als Netzschwingungssignal bezeichnet werden kann. Dieses Netzschwingungssignal weist zwar idealisierend nur die Zielschwingung auf, tatsächlich können aber, u.a. durch die Signalübertragungswege und weil verwendete Filter nicht ideal arbeiten, Rauschanteile auftreten. Hier ist besonders zu beachten, dass das extrahierte Netzschwingungssignal in das Dämpfungssollsignal umgewandelt werden soll. Auch kleine Rauschanteile würden dann zu entsprechenden Anteilen in dem Dämpfungssollsignal führen, was zu vermeiden ist.

Ein weiteres mögliches Umformelement ist ein Verstärkungselement zum Verstärken der extrahierten Netzschwingung. Eine solche Verstärkung dient nicht nur dazu, dass das Dämpfungssollsignal eine ausreichende Amplitude erhält, sondern auch dazu, dass die Amplitude des Dämpfungssollsignals, oder eines Zwischensignals deutlich höher als eine Amplitude möglicher Störeinflüsse sein kann.

Als weiteres mögliches Umformelement wird ein Hochpassfilter vorgeschlagen zum Herausfiltern niederfrequenter Signalanteile. Hier wurde besonders erkannt, dass in modernen elektrischen Versorgungsnetzen Windenergieanlagen in das elektrische Versorgungsnetz einspeisen. Diese können durch Windschwankungen entsprechend niederfrequente Spannungsschwankungen einbringen. Besonders kommt ein solcher Hochpassfilter zum Herausfiltern solcher niederfrequenten Signalanteile auch dann in Betracht, wenn das vorgeschlagene Verfahren von Windenergieanlagen, insbesondere von einem Windpark umgesetzt wird. Dann können solche windschwankungsbedingte, niederfrequente Signalanteile in dem Netzsignal auftreten, ohne dass sie in dem elektrischen Versorgungsnetz auftreten, zumindest nicht in signifikanter Höhe.

Als ein weiteres Umformelement wird wenigstens ein Lead-Lag-Filter vorgeschlagen, der auch als Lead-Lag-Glied bezeichnet werden kann. Ein Lead-Lag-Glied weist ein Lead-Glied und ein Lag-Glied auf, die zueinander in Reihe geschaltet sind. Der Begriff ist auch in der deutschen Fachwelt ein Fachbegriff und könnte allenfalls als Führungs-Verzögerungs-Filter bzw. Führungs-Verzögerungs-Glied bezeichnet werden. Ein solcher Lead-Lag-Filter ist zum Kompensieren von kommunikationsbedingten Verzögerungszeiten vorgesehen. Solche kommunikationsbedingten Verzögerungszeiten sind im Allgemeinen gut bekannt und der Lead-Lag-Filter kann so eingestellt werden, dass er solche Verzögerungszeiten kompensiert. Bspw. können zwei Lead-Lag-Filter verwendet werden, eines mit höherfrequentem Lead-Glied-Verhalten und eines mit höherfrequentem Lag-Glied-Verhalten. Bei einem Lead-Lag-Glied (oder Lead-Lag-Filter) mit höherfrequentem Lead-Glied-Verhalten weist das Lead-Lag-Glied in einem höherfrequenten Bereich Lead-Glied-Verhalten und in einem Bereich mit geringerer Frequenz Lag-Glied-Verhalten auf.

Gemäß einem Aspekt wird vorgeschlagen, dass in Abhängigkeit von einer Eigenschaft der identifizierten Zielschwingung, insbesondere in Abhängigkeit von einer Amplitude der identifizierten Zielschwingung, das Bestimmen und/oder Aufschalten des Dämpfungssollsignals aktiviert oder deaktiviert wird. Insbesondere ist zum Aktivieren einer Aktivierungsschwelle und zum Deaktivieren einer Deaktivierungsschwelle jeweils als Vergleichswert für die Amplitude die Zielschwingung vorgesehen, und die Aktivierungsschwelle ist größer als die Deaktivierungsschwelle.

Hier wird besonders vorgesehen, dass das Identifizieren der Zielschwingung unbeeinflusst bleibt, lediglich das Bestimmen und/oder Aufschalten des Dämpfungssollsignals aktiviert oder deaktiviert wird. Das Bestimmen des Dämpfungssollsignals kann grundsätzlich immer unverändert weiterlaufen, da es im Wesentlichen ein computergestützter Vorgang sein kann. Besonders aber das Aufschalten des Dämpfungssollsignals kann wahlweise durchgeführt oder unterdrückt bzw. beendet werden.

Hier wurde besonders erkannt, dass das Aufschalten eines solchen Dämpfungssollsignals, insbesondere das Aufschalten eines entsprechenden Blindleistungssignals auch zumindest einen störenden Einfluss auf den übrigen Betrieb der Einspeiseeinrichtung haben kann. Bspw. wird im Falle eines Dämpfungssignals als Blindleistung eine spannungsabhängige Blindleistungseinspeisung beeinflusst. Das sollte vermieden werden, wenn die Schwingung klein ist. Ist aber die Amplitude der identifizierten Zielschwingung ausreichend hoch, ist das Aufschalten des Dämpfungssollsignals sinnvoll. Eine Einschaltschwelle sollte allerdings höher als eine Ausschaltschwelle sein, also die Aktivierungsschwelle größer als die Deaktivierungsschwelle, um zu verhindern, dass in dem Fall, wenn die Zielschwingung etwa im Bereich der Schwelle ist, ein ständiger Wechsel zwischen Aktivierung und Deaktivierung erfolgt.

Gemäß einem Aspekt wird vorgeschlagen, dass zum Aufschalten des Dämpfungssignals eine Aktivierungsfunktion erzeugt wird, die das aufzuschaltende Dämpfungssollsignal zu Beginn des Aufschaltens gesteuert hochfährt, insbesondere gemäß einer Rampenfunktion hochfährt. Außerdem oder alternativ wird vorgeschlagen, dass zum Beenden des Aufschaltens des Dämpfungssignals eine Deaktivierungsfunktion verwendet wird, die das aufgeschaltete Dämpfungssollsignal zum Beenden des Aufschaltens gesteuert herunterfährt, insbesondere gemäß einer Rampenfunktion herunterfährt.

Dadurch werden diskontinuierliche Schaltvorgänge vermieden. Insbesondere wird auch das Aufschalten einer ungünstigen Phasenlage vermieden. Das Dämpfungssollsignal und damit das Dämpfungssignal ergibt sich aus dem extrahierten Netzschwingungssignal und kann im Wesentlichen als sinusförmiges Signal angenommen werden. Es wird im Grunde nicht durch Parameter vorgegeben, sondern durch Umwandlung aus dem extrahierten Schwingungssignal. Wird nun das Aufschalten des Dämpfungssignals ohne Aktivierungsfunktion durchgeführt, kann dies möglicherweise genau dann passieren, wenn das sinusförmige Dämpfungssignal gerade eine maximale positive oder negative Amplitude aufweist, diese würde dann aufgeschaltet werden, was möglicherweise selbst eine Schwingung auslösen könnte. Gleiches gilt für das Abschalten. Daher wird das quasi sanfte Aufschalten bzw. Beenden des Aufschaltens vorgeschlagen.

Gemäß einem Aspekt wird vorgeschlagen, dass bei mehreren erkannten Schwingungen eine als Zielschwingung ausgewählt wird, insbesondere in Abhängigkeit von einer Amplitude, und insbesondere so, dass von mehreren erkannten Schwingungen diejenige mit der größten Amplitude als Zielschwingung ausgewählt wird. Dazu wird weiter vorgeschlagen, dass das Dämpfungssollsignal in Abhängigkeit von der ausgewählten Zielschwingung erzeugt wird und nach der Aktivierung des Bestimmens und/oder Aufschaltens des Dämpfungssignals die Zielschwingung beibehalten wird, und erst nach einem Deaktivieren des Bestimmens bzw. Aufschaltens eine andere der erkannten Schwingungen als Zielschwingung ausgewählt wird.

Hier liegt besonders die Erkenntnis zu Grunde, dass das Aufschalten des Dämpfungssignals auch dazu führen soll, dass die erkannte Zielschwingung zumindest in ihrer Amplitude reduziert wird. Das Ergebnis könnte dann sein, dass diese Reduzierung erfolgreich ist und eine andere Schwingung deshalb die größte Amplitude aufweist und als Zielschwingung ausgewählt werden könnte. Dann müsste aber im laufenden Prozess des aufgeschalteten Dämpfungssignals dieses geändert werden. Das ist aber aus mehrerlei Hinsicht ungünstig.

Zum einen können dadurch Schwingungen auftreten, also allein durch den Schaltvorgang. Zum anderen würde fälschlicherweise aus einer Abnahme der zuerst identifizierten Zielschwingung geschlossen werden, dass diese generell geringer geworden ist, obwohl sie nur durch die Dämpfung geringer geworden ist. Das Abschalten dieser Dämpfung, also durch Wechsel zu einer anderen Dämpfung einer anderen Schwingung, würde diese zuerst ausgewählte Zielschwingung also sofort wiederaufleben lassen, was vermieden werden soll.

Ist aber die Aufschaltung des Dämpfungssignals deaktiviert, und stellt sich dann heraus, dass eine andere Zielschwingung größer ist, ist dann das Ändern der identifizierten Zielschwingung gerechtfertigt und sinnvoll.

Gemäß einem Aspekt wird vorgeschlagen, dass der Gesamtfrequenzbereich vorgebbar ist, und auf eine Vorgabe des Gesamtfrequenzbereichs eine automatische Aufteilung des Gesamtfrequenzbereichs in die Teilfrequenzbereiche erfolgt.

Hier wurde besonders erkannt, dass nicht nur erwartbare niederfrequente Schwingungen sich ändern können, sondern dass sich auch Frequenzbereiche, in denen niederfrequente Schwingungen störend für ein elektrisches Versorgungsnetz sind, verändern können oder vom elektrischen Versorgungsnetz abhängen können, oder vom Einspeisepunkt abhängen können.

Hier kommt besonders in Betracht, dass ein Netzbetreiber den Gesamtfrequenzbereich vorgibt, also den Bereich, in dem er niederfrequente Schwingungen für störend hält und dort eine Schwingungsunterdrückung vorschreibt. Die Vorgabe eines solchen Gesamtfrequenzbereichs kann auch bedeuten, dass dies für eine mit dem elektrischen Versorgungsnetz verbundene Einspeiseeinrichtung nur selten oder einmal erfolgt, besonders, solange keine neue Vorgabe durch einen Netzbetreiber erfolgt. Eine baugleiche Einspeiseeinrichtung, also eine baugleiche Windenergieanlage, kann aber bei Anschluss an einem anderen Netzanschlusspunkt, insbesondere bei Anschluss an einem anderen elektrischen Versorgungsnetz, eine andere Vorgabe für den Gesamtfrequenzbereich erhalten.

Die vorgeschlagene Aufteilung des Gesamtfrequenzbereichs in die Teilfrequenzbereiche kann dabei gut automatisiert werden, indem z.B. Größenaufteilungen dieser Teilfrequenzbereiche vorgegeben werden, z.B. dadurch, dass die obere Bereichsfrequenz immer um einen vorbestimmten Faktor größer als die untere Bereichsfrequenz ist. Die obere Bereichsfrequenz kann bspw. immer doppelt so groß wie die untere Bereichsfrequenz gewählt werden. Ebenfalls kann von einem zum nächsten Teilfrequenzbereich eine Überschneidung vorgegeben werden, z.B. in einem Prozentbereich. Die untere Bereichsfrequenz eines Teilfrequenzbereichs kann bspw. um 10% unter der oberen Bereichsfrequenz des nächst niedrigeren Teilfrequenzbereichs liegen.

Mit solchen Vorgaben ist es dann ohne weiteres möglich, einen vorgegebenen Gesamtfrequenzbereich automatisch in Teilfrequenzbereiche aufzuteilen.

Oben wurden zudem bereits Erläuterungen gegeben zu der Wahl des zu wählenden Zeitausschnitts und der zu wählenden Abtastrate, nämlich in Abhängigkeit von unterer und oberer Bereichsfrequenz des jeweiligen Teilfrequenzbereichs. Somit können auch diese Werte automatisch aus dem Gesamtfrequenzbereich, der vorgegeben werden kann, abgeleitet werden. Auch die übrige Analyse kann entsprechend automatisch angepasst werden. Das kann je nach erkannter Schwingungsfrequenz erfolgen. Besonders auch adaptive Filter können automatisch angepasst werden. Besonders wird dafür und für alle übrigen Ausführungsformen vorgeschlagen, den Bandpassfilter als adaptiven Filter vorzusehen. Die Adaption kann dadurch erfolgen, dass zumindest eine Bandpassfrequenz eingestellt wird.

Gemäß einem Aspekt wird vorgeschlagen, dass das Einspeisen des Einspeisesignals mittels eines mehrere Windenergieanlagen umfassenden Windparks erfolgt, wobei die Windenergieanlagen jeweils einen Teil des Einspeisesignals erzeugen, und jede Windenergieanlage dieselbe Zielschwingung zum Erzeugen des Einspeisesignals berücksichtigt. Hier wurde besonders erkannt, dass ein solcher Windpark besonders dann gut eine Schwingungsdämpfung durchführen kann, wenn alle Windenergieanlagen dieselbe Schwingung dämpfen.

Besonders beim Erzeugen solcher Dämpfungssignale, was zeitkritisch sein kann, besteht die Herausforderung, solche Dämpfungssignale möglichst synchron und natürlich gleichartig zu erzeugen, damit sie sich auch zu einem Gesamtdämpfungssignal überlagern. Eine zentrale Koordinierung eines solchen Dämpfungssignals durch einen Parkregler kann aufgrund notwendiger schneller parkübergreifender Kommunikation problematisch sein. Insbesondere kann das zentrale Vorgeben eines Dämpfungssollsignals durch einen Parkregler an Kommunikationsgrenzen innerhalb des Windparks stoßen.

Die vorgeschlagene Lösung vermeidet dieses Problem, entschärft es zumindest. Zentral wird gesteuert, dass alle Windenergieanlagen dieselbe Zielschwingung verwenden. Diese Zielschwingung, besonders ihre Frequenz, kann dann besonders für den Bandpassfilter verwendet werden. Das kann in jeder Windenergieanlage individuell erfolgen und auch die weitere Signalverarbeitung kann in jeder Windenergieanlage individuell erfolgen, sodass keine großen Kommunikationsressourcen innerhalb des Windparks erforderlich sind.

Bei ausreichend Kommunikationsressourcen kommt aber auch in Betracht, dass im Park zentral eine extrahierte Netzschwingung bzw. ein entsprechendes extrahiertes Netzschwingungssignal für alle Windenergieanlagen bereitgestellt wird. Auch ein umgewandeltes Dämpfungssollsignal kommt natürlich als zentrales Signal in Betracht, das ein Parkregler an alle Windenergieanlagen verteilt, sofern die Kommunikation im Park das zulässt.

Erfindungsgemäß wird auch ein Windenergiesystem vorgeschlagen, das eine oder mehrere Windenergieanlagen umfasst. Das Windenergiesystem kann also eine Windenergieanlage sein, oder das Windenergiesystem kann ein Windpark mit mehreren Windenergieanlagen sein. Das Windenergiesystem weist dazu wenigstens einen Messaufnehmer auf, zum Aufnehmen eines die niederfrequenten Schwingungen aufweisenden Netzsignals und das Windenergiesystem weist wenigstens eine Steuereinrichtung auf, die dazu vorbereitet ist, ein Verfahren zum Dämpfen niederfrequenter Schwingungen durchzuführen. Die Steuereinrichtung kann auch einen Wechselrichter bzw. eine Wechselrichteranordnung oder Umrichteranordnung zum Einspeisen elektrischer Leistung und damit auch zum Einspeisen von Blindleistung in das elektrische Versorgungsnetz aufweisen.

Gemäß einem Aspekt ist das Windenergiesystem dazu vorbereitet, ein Verfahren gemäß einem der vorstehend beschriebenen Ausführungsformen bzw. Aspekte auszuführen. Insbesondere ist die Steuereinrichtung dazu vorbereitet, das Verfahren durchzuführen. Insbesondere kann auch der Messaufnehmer Teil der Steuereinrichtung sein. Wenn der Messaufnehmer nicht Teil der Steuereinrichtung ist, ist die Steuereinrichtung insbesondere dazu vorbereitet, die Verfahrensschritte auszuführen, die der Messaufnehmer nicht ausführt.

Nachfolgend wird die Erfindung nun anhand von Ausführungsformen beispielhaft unter Bezugnahme auf die begleitenden Figuren näher erläutert.
- Fig. 1: zeigt eine Windenergieanlage in einer perspektivischen Darstellung.
- Fig. 2: zeigt einen Windpark in einer schematischen Darstellung.
- Fig. 3: zeigt ein Diagramm für eine mögliche Frequenzaufteilung.
- Fig. 4: zeigt eine Dämpfungsregelungsstruktur zum Bestimmen eines Dämpfungssollsignals.
- Fig. 5: zeigt eine Struktur mit Umformelementen als Teil der Regelungsstruktur gemäß Fig. 4.
- Fig. 6 bis 8: zeigen alternative Gesamtregelungsstrukturen zum Aufschalten eines Dämpfungssollsignals.

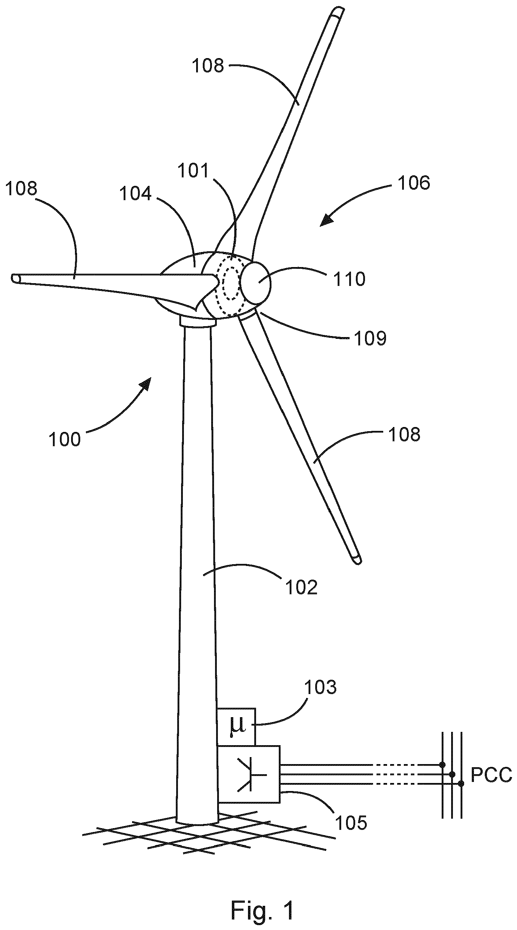

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

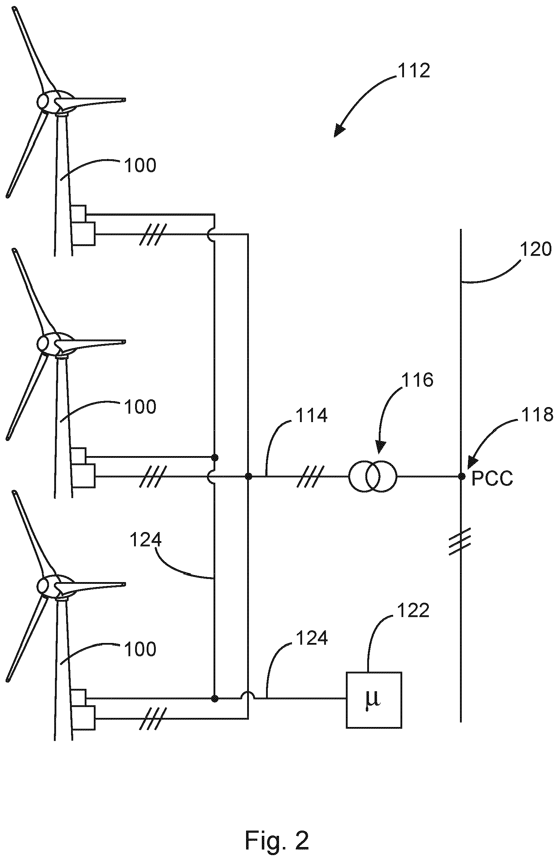

Fig. 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112. Es kann beispielsweise das Parknetz 114 anders gestaltet sein, indem beispielsweise auch ein Transformator am Ausgang jeder Windenergieanlage 100 vorhanden ist, um nur ein anderes Ausführungsbeispiel zu nennen.

Der Windpark 112 weist zudem einen zentralen Parkrechner 122 auf, der synonym auch als zentrale Parksteuerung bezeichnet werden kann. Dieser kann über Datenleitungen 124, oder kabellos, mit den Windenergieanlagen 100 verbunden sein, um darüber mit den Windenergieanlagen Daten auszutauschen und insbesondere Messwerte von den Windenergieanlagen 100 zu erhalten und Steuerwerte an die Windenergieanlagen 100 zu übertragen.

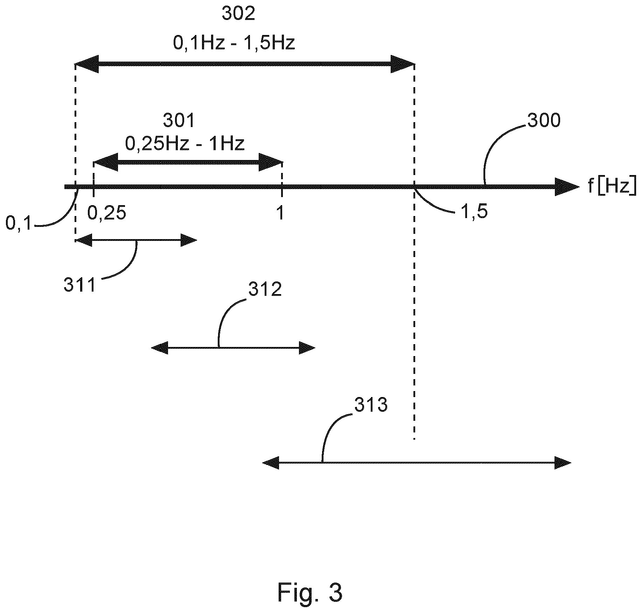

Fig. 3 zeigt ein Diagramm zur Veranschaulichung möglicher Frequenzaufteilungen mit einem Frequenzstrahl 300, an dem mögliche Schwingungsfrequenzen in Hz aufgetragen sind.

Exemplarisch sind ein erster Frequenzbereich 301 und ein zweiter Frequenzbereich 302 eingezeichnet. Dieser erste bzw. zweite Frequenzbereich 301 und 302 kennzeichnen Bereiche, in denen das Erfassen und Dämpfen einer niederfrequenten Schwingung von Interesse ist. Solche Frequenzbereiche können je nach elektrischem Versorgungsnetz oder Netzabschnitt eines elektrischen Versorgungsnetzes variieren.

Zur Erfassung wenigstens einer niederfrequenten Schwingung wird eine Aufteilung in mehrere, insbesondere überlappende Teilfrequenzbereiche vorgeschlagen. Fig. 3 zeigt dafür exemplarisch einen ersten, zweiten und dritten Teilfrequenzbereich 311, 312 und 313.

Die ersten beiden Teilfrequenzbereiche 311 und 312 decken den ersten Frequenzbereich 301 ab und alle drei Teilfrequenzbereiche 311 bis 313 decken den zweiten Frequenzbereich 302 ab. Es können aber auch alle drei Teilfrequenzbereiche 311 bis 313 zum Erfassen einer niederfrequenten Schwingung für den ersten Bereich 301 verwendet werden. Wird dabei eine niederfrequente Schwingung außerhalb des ersten Bereichs 301 detektiert, kann diese verworfen werden bzw. braucht nicht weiter betrachtet zu werden.

Für die in Fig. 3 gezeigten beispielhaften drei Teilfrequenzbereiche 311 bis 313 sind jeweils unterschiedliche Zeitfenster zur Erfassung vorgesehen, und gleichzeitig sind unterschiedliche Auflösungen vorgesehen. Die Anzahl der Abtastungen pro Fenster, und damit pro Analyse, können aber gleich sein. Für den ersten Teilfrequenzbereich 311 ist ein Zeitfenster mit einer Länge von 25 Sekunden und einer Auflösung von 0,5 Sekunden vorgesehen. Für den zweiten Teilfrequenzbereich 312 ist ein Zeitfenster mit einer Länge von 12,5 Sekunden und einer Auflösung von 0,25 Sekunden vorgesehen. Für den dritten Teilfrequenzbereich 313 ist ein Zeitfenster mit einer Länge von 5 Sekunden und einer Auflösung von 0,1 Sekunde vorgesehen.

Somit ist es besonders möglich, für Bereiche höherer Frequenz ein kürzeres Zeitfenster vorzusehen, um dadurch auch entsprechend schnell eine niederfrequente Schwingung zu erfassen. Durch die Variation der Auflösung kann zudem erreicht werden, dass keine zu große Rechenkapazität benötigt wird, was der Fall wäre, wenn die Auflösung eines kleinen Zeitfensters für einen hohen Frequenzbereich bei einem langen Zeitfenster für einen niedrigen Frequenzbereich beibehalten werden würde. Die vorgeschlagene Lösung vermeidet das.

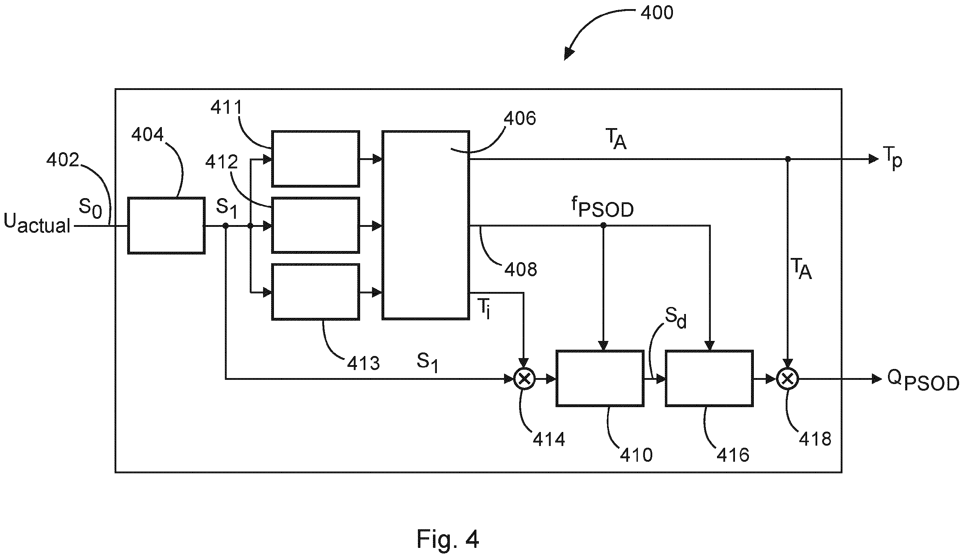

Fig. 4 zeigt eine Dämpfungsregelungsstruktur 400 zum Bestimmen eines Dämpfungssollsignals zum Dämpfen einer niederfrequenten Schwingung.

Dazu weist die Dämpfungsregelungsstruktur 400 einen Signaleingang 402 auf, an dem die Netzspannung oder ein die niederfrequenten Schwingungen aufweisendes Netzsignal eingegeben wird. Es kann somit die Netzspannung unmittelbar erfasst und dort eingegeben werden, also ein aufgenommenes Netzsignal. Vorzugsweise wird die Netzspannung durch die Erfassung von drei Leiter-Erde-Spannungen des dreiphasigen Systems aufgenommen. Daraus wird ein Raumzeiger berechnet und von diesem Raumzeiger wird lediglich die Amplitude betrachtet. Von der Amplitude dieses Raumzeigers kann die Nennspannung, also ein fester Wert, abgezogen werden. Es bleibt dann nur eine Differenz zwischen der Amplitude des Raumzeigers und dem festen Netzspannungswert übrig. Diese Differenz kann an dem Signaleingang 402 eingegeben werden.

Diese Differenz ist somit ein Eingangssignal bzw. Netzsignal, das die niederfrequenten Schwingungen weiterhin aufweist, denn es wurde nur ein konstanter Wert abgezogen. Dieses Eingangssignal wird dann über den Signalprozessblock 404 geführt, der eine erste Filterung vornehmen kann, um insbesondere ein Messrauschen herauszufiltern. Der Signalprozessblock 404 kann somit insbesondere Tiefpassverhalten aufweisen.

Es wird somit am Ausgang des Signalprozessblocks 404 ein vorgefiltertes oder vorbearbeitetes Signal S₁ ausgegeben und in einen der Analyseblöcke 411 bis 413 eingegeben. In dem Signalprozessblock 404, oder in einem anderen Element, kann vorzugsweise ein Netzfehler erkannt werden, z.B. ein Spannungseinbruch. Wird ein Netzfehler erkannt, kann während des Netzfehlers an Stelle des erfassten bzw. gemessenen Signals ein vor dem Netzfehler erfasstes Signal oder dazu repräsentatives Signal oder Wert, wie z.B. ein Mittelwert verwendet werden. Dies betrifft besonders einen sehr kurzen Netzfehler im Bereich von 100 bis 500 ms. Hier wurde besonders erkannt, dass das vorgeschlagene Dämpfen von Schwingungen meist nach einem Netzfehler wichtig ist. Durch die vorgeschlagene Überbrückung des Spannungseinbruchs bei der Messung kann erreicht werden, dass nach dem Fehler schnell eine gute Erfassung der niederfrequenten Schwingung vorliegt.

Zum Erkennen niederfrequenter Schwingungen in dem vorgefilterten Signal S₁ sind somit mehrere Analyseblöcke vorgesehen, nämlich hier ein erster, zweiter und dritter Analyseblock 411, 412 bzw. 413. Jeder dieser drei Analyseblöcke führt jeweils für einen Teilfrequenzbereich eine Frequenzanalyse durch. Dazu weist jeder der drei Analyseblöcke 411 bis 413 ein eigenes Zeitfenster und eine eigene Auflösung auf. Das könnte beispielsweise für drei unterschiedliche Teilfrequenzbereiche 311 bis 313 mit den entsprechenden Fensterlängen und Auflösungen erfolgen, wie in Fig. 3 erläutert wurde.

Das Ergebnis jedes der drei Analyseblöcke 411 bis 413 kann eine identifizierte niederfrequente Schwingung sein. Es kommt aber natürlich auch in Betracht, dass jeweils keine niederfrequente Schwingung vorhanden ist und daher auch keine erkannt werden kann. Es kommt auch in Betracht, dass in einem oder mehreren der Analyseblöcke jeweils mehrere niederfrequente Schwingungen erkannt werden.

In einem Fall, der hier auch zur Erläuterung dient, wird in jedem der drei Analyseblöcke 411 bis 413 jeweils eine niederfrequente Schwingung erfasst. Zu jeder erfassten niederfrequenten Schwingung gibt der jeweilige Analyseblock 411 bis 413 Frequenz und Amplitude aus und übergibt diese Werte an eine Koordinationseinheit 406.

In der Koordinationseinheit 406 werden diese erkannten niederfrequenten Schwingungen ausgewertet. Zunächst wird ausgewertet, ob sie überhaupt in dem zu betrachtenden Frequenzbereich liegen. Liegt also beispielsweise, Bezug nehmend auf Fig. 3, eine niederfrequente Schwingung im Bereich von 1,2 Hz, während aber nur der erste Frequenzbereich 301 relevant ist, der nur von 0,25 bis 1Hz reicht, so wird diese niederfrequente Schwingung verworfen bzw. nicht weiter betrachtet.

Von den verbleibenden niederfrequenten Schwingungen wird eine als Zielschwingung identifiziert und nur diese wird dann weiter betrachtet. Besonders kommt in Betracht, dass diejenige niederfrequente Schwingung als Zielschwingung betrachtet wird, die von allen erkannten und relevanten niederfrequenten Schwingungen die größte Amplitude aufweist. Es kommt aber auch in Betracht, ein anderes oder weiteres Kriterium zu betrachten. Beispielsweise kann für jede niederfrequente Schwingung ein Quotient aus Amplitude und Schwingungsfrequenz gebildet werden und die niederfrequente Schwingung mit dem hierbei berechneten größten Quotienten als Zielschwingung identifiziert werden, um ein weiteres Beispiel zu nennen.

Es kommt natürlich auch in Betracht, dass alle drei Analyseblöcke 411 bis 413, die repräsentativ auch für eine andere Anzahl von Analyseblöcken steht, insgesamt nur eine einzige niederfrequente Schwingung identifizieren, die dann somit automatisch die Zielschwingung bildet.

Von der so identifizierten Zielschwingung wird ihre Schwingungsfrequenz als Schwingungsfrequenz f_{PSOD} der zu dämpfenden niederfrequenten Schwingung am Frequenzausgang 408 ausgegeben. Diese Frequenz f_{PSOD} kann vereinfachend als Dämpfungsfrequenz f_{PSOD} bezeichnet werden.

Diese Dämpfungsfrequenz f_{PSOD} wird dann in einen Bandpassfilterblock 410 eingegeben. Der Bandpassfilterblock 410 wird dann entsprechend der eingegebenen Dämpfungsfrequenz f_{PSOD} eingestellt, nämlich insbesondere so, dass die Dämpfungsfrequenz f_{PSOD} die Bandpassfilterfrequenz bildet.

Der Bandpassfilterblock 410, der nun auf die Dämpfungsfrequenz f_{PSOD} eingestellt ist, kann somit das vorgefilterte Signal S₁ als Eingangssignal erhalten. Dazu kann die Koordinationseinheit 406 einen InitialisierungstriggerTi ausgeben, der dann nämlich den Wert 1 aufweist. Somit wird im Eingangsmultiplikator 414 das vorgefilterte Signal S₁ mit dem Initialisierungstrigger Ti multipliziert. Das vorgefilterte Signal S₁ wird also dadurch zum Bandpassfilterblock 410 durchgeleitet. Insbesondere ist vorgesehen, dass der Initialisierungstrigger Ti nur die Werte 0 oder 1 annehmen kann. Vor der Initialisierung gibt die Koordinationseinheit 406 als Initialisierungstrigger Ti also nur den Wert 0 aus.

Das vorgefilterte Signal S₁ wird dann durch den Bandpassfilterblock 410 geführt und es weist natürlich auch die als dominant identifizierte niederfrequente Schwingung auf. Der Bandpassfilterblock 410 bzw. der darin implementierte Bandpassfilter ist nun genau auf die dominante zu dämpfende niederfrequente Schwingung angepasst, was dazu führt, dass von dem vorgefilterten Signal S₁, das zunächst noch alle Frequenzanteile aufweist, nun nur noch die zu dämpfende Zielschwingung durchgeleitet wird, und alles andere herausgefiltert wird. Der Bandpassfilterblock 410 gibt also das zu dämpfende Schwingungssignal Sd aus und übergibt es dabei an den Bestimmungsreglerblock 416.

Der Bestimmungsreglerblock 416 formt das zu dämpfende Schwingungssignal Sd in ein Dämpfungssollsignal Q_{PSOD} um.

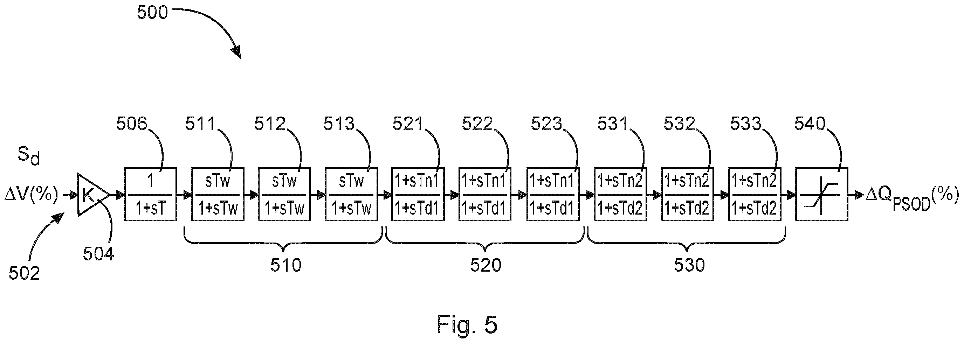

Der Bestimmungsregelerblock 416 kann dabei insbesondere Amplitude und Phase des zu dämpfenden Schwingungssignals Sd verändern und gegebenenfalls weitere Umformungen wie Filterungen vornehmen. Details dazu werden unten zur Fig. 5 erläutert, die im Grunde die innere Struktur des Bestimmungsregelerblocks 416 zeigt.

Das Dämpfungssollsignal Q_{PSOD} soll zur Dämpfung auf ein weiteres Signal aufgeschaltet werden, um dadurch ein Einspeisesollsignal zu erzeugen, das dieses Dämpfungssollsignal beinhaltet. Details dazu werden weiter unten noch beschrieben. Zunächst ist aber vorgesehen, dass das vom Bestimmungsregelerblock 416 erzeugte Dämpfungssollsignal Q_{PSOD} zur Aktivierung in seiner Amplitude langsam hochgefahren werden kann, insbesondere von null. Dazu ist ein Ausgangsmultiplikator 418 vorgesehen. Das Dämpfungssollsignal Q_{PSOD} kann in dem Ausgangsmultiplikator 418 mit einem Wert multipliziert werden, der von 0 bis 1 beispielsweise als Rampe ansteigen kann. Ein solcher Wert kann von der Koordinationseinheit 406 als Ausgabetrigger T_{A} ausgegeben werden. Dieser Ausgabetrigger T_{A} kann auch als Ausgabetrigger T_{A} ausgegeben werden, um dann als Aktivierungsindikator in nachfolgenden Regelungsstrukturen verwendet zu werden.

Die Dämpfungsregelungsstruktur 400 erhält also ein Eingangssignal So, das im Grunde repräsentativ für das gesamte Netzspannungssignal ist, und davon abhängig gibt die Dämpfungsregelungsstruktur 400 neben dem Ausgabetrigger T_{A}, die als Aktivierungsindikator fungieren kann, das Dämpfungssollsignal Q_{PSOD} aus.

Fig. 5 zeigt eine Struktur mit Umformelementen, von denen viele auch als Filter bezeichnet werden können, die in dem Bestimmungsreglerblock 416 enthalten sein können. Das zu dämpfende Schwingungssignal Sd kann am Umformereingang 502 der Umformerstruktur 500 eingegeben werden. Es kommt in Betracht, dass hier nur die normierte Differenzspannung eingegeben wird, beispielsweise als prozentualer Wert bezogen auf die Nennspannung. Die Spannungsdifferenz ist also, wie oben erläutert wurde, die Amplitude des Raumzeigers, der aus den drei Spannungswerten der drei Phasen berechnet wird, abzüglich dem Wert der Nennspannung. Die Nennspannung kann 100 % entsprechen.

Dieses Eingangssignal kann zunächst über ein Verstärkungsglied 504 gegeben werden, um es zu verstärken. Ein Tiefpassfilterglied 506 kann sich anschließen, das einen noch verbleibenden Rauschanteil weiter senken kann.

Weitere Elemente, die sich anschließen, können jeweils aus mehreren einzelnen Gliedern zusammengesetzt sein. Fig. 5 zeigt dazu drei Beispiele mit jeweils drei Gliedern. Es können aber jeweils auch mehr oder insbesondere weniger Glieder vorgesehen sein. Außerdem wird darauf hingewiesen, dass, soweit die Elemente linear sind, sie auch in einer anderen als der dargestellten Reihenfolge angeordnet sein können. Unter Berücksichtigung nicht beliebig genauer Berechnung und nicht beliebig genauer Signalwiedergabe kann aber die vorgeschlagene Reihenfolge vorteilhaft sein.

An das Tiefpassfilterglied 506 schließt sich ein Hochpassfilterelement 510 an, das hier aus drei Hochpassfiltergliedern 511 bis 513 aufgebaut ist. Das Hochpassfilterelement 510 ist dazu vorgesehen, noch verbliebene niederfrequente Signalanteile aus dem zu dämpfenden Schwingungssignal herauszufiltern. Solche niederfrequenten Signalanteile können besonders durch einspeisende Windenergieanlagen aufgrund von Windschwankungen auftreten.

Sowohl hochfrequente Rauschanteile, die durch das Tiefpassfilterglied 506 herausgefiltert werden, als auch niederfrequente Signalanteile, die durch das Hochpassfilterelement 510 herausgefiltert werden, sind natürlich auch schon durch den Bandpassfilterblock 410 der Fig. 4 herausgefiltert worden. Da Filter aber selten ideal arbeiten, insbesondere selten exakt trennscharf sind, können dennoch solche Signalanteile auch nach dem Filtern durch den Bandpassfilterblock 410 vorhanden sein.

Das Tiefpassfilterglied 506 und das Hochpassfilterelement 510 sind auf die Dämpfungsfrequenz f_{PSOD} abgestimmt. Daher wird diese Dämpfungsfrequenz f_{PSOD} in den Bestimmungsreglerblock 416 eingegeben und kann damit in dieser Umformerstruktur 500 der Fig. 5 berücksichtigt werden. Das Tiefpassfilterglied 506, das Hochpassfilterelement 510 und die nachfolgend noch erläuterten lead-lag-Elemente bzw. lead-lag-Glieder können ebenfalls in Abhängigkeit von der Dämpfungsfrequenz f_{PSOD} eingestellt werden.

Das Tiefpassfilterglied 506 wird so eingestellt, dass seine Grenzfrequenz oberhalb der Dämpfungsfrequenz f_{PSOD} liegt. Das Hochpassfilterelement 510 bzw. die Hochpassfilterglieder 511 bis 513 werden so eingestellt, dass ihre Grenzfrequenz bzw. Grenzfrequenzen unterhalb der Dämpfungsfrequenz f_{PSOD} liegt bzw. liegen.

An das Hochpassfilterelement 510 schließt sich ein erstes lead-lag-Filterelement 520 an, das aus drei einzelnen lead-lag-Filtergliedern 521 bis 523 aufgebaut ist. Durch die Verwendung mehrerer Filterglieder, hier also der drei lead-lag-Filterglieder 521 bis 523, kann eine höhere Trennschärfe erreicht werden. Das gilt auch für das Hochpassfilterelement 510 und auch das nachfolgend noch beschriebene zweite lead-lag-Filterelement.

Durch einen lead-lag-Filter können Signalverschiebungen erreicht werden, die frequenzabhängig sind. So kann besonders das zu dämpfende Schwingungssignal, insbesondere nach der beschriebenen weiteren Filterung, die dieses zu dämpfende Schwingungssignal weiter herausarbeitet, entsprechend verschoben werden. Dadurch können kommunikationsbedingte Verzögerungszeiten kompensiert werden.

Ein lead-lag-Filter, der auch als lead-lag-Glied bezeichnet werden kann, kann dadurch realisiert werden, dass wenigstens ein Filterglied oder Filterelement als lead-Glied oder lead-Element ausgebildet ist und ein weiteres Filterelement oder Filterglied als lag-Filter oder lag-Glied ausgebildet ist.

Weiterhin kann ein zweites lead-lag-Filterelement 530 vorgesehen sein, das ebenfalls aus drei lead-lag-Filtergliedern 531 bis 533 aufgebaut ist. Es kommt auch in Betracht, dass das erste lead-lag-Filterelement 520 im betrachteten Frequenzbereich im Wesentlichen als lead-Element arbeitet, wohingegen das zweite lead-lag-Filterelement 530 im betrachteten Frequenzbereich im Wesentlichen als lag-Element arbeitet.

Schließlich ist noch ein Begrenzungsglied 540 vorgesehen, mit dem gegebenenfalls eine Begrenzung des erzeugten Signals durchgeführt werden kann. Hierdurch kann vermieden werden, dass durch die Bearbeitung mit den diversen Filterelementen eine unerwünscht hohe Signalamplitude auftritt. Eine solche unerwünscht hohe Signalamplitude kann auch dann auftreten, wenn das zu dämpfende Schwingungssignal eine entsprechend hohe Amplitude aufweist. Ein entsprechendes Dämpfungssollsignal zu generieren, das ebenfalls eine hohe Amplitude aufweist, wäre zwar dem Grunde nach angemessen, kann aber Probleme bei der Umsetzung haben, sodass diese Begrenzung vorgesehen ist.

Somit wird von der Umformerstruktur 500 ein Dämpfungssollsignal ΔQ_{PSOD} ausgegeben, das ebenfalls als prozentualer Wert ausgegeben werden kann. Als Bezug kann hier ein maximaler Blindleistungswert der Einspeisereinrichtung verwendet werden, der der Höhe nach der Nennleistung der Einspeiseeinrichtung entsprechen kann. Die Bezeichnung mit dem griechischen Buchstaben Δ deutet an, dass dieses Dämpfungssollsignal auf ein vorhandenes Signal aufgeschaltet werden soll. Es kann, insbesondere nach Multiplikation an dem Ausgangsmultiplikator 418 mit dem Aktivierungstrigger T_{A} dem Dämpfungssollsignal Q_{PSOD} entsprechen.

Insbesondere ist hier vorgesehen, als Dämpfungssollsignal ein entsprechendes Blindleistungssignal zu bestimmen und darauf sind die Elemente bzw. Glieder in dem Bestimmungsreglerblock 416 bzw. der Umformerstruktur 500 angepasst.

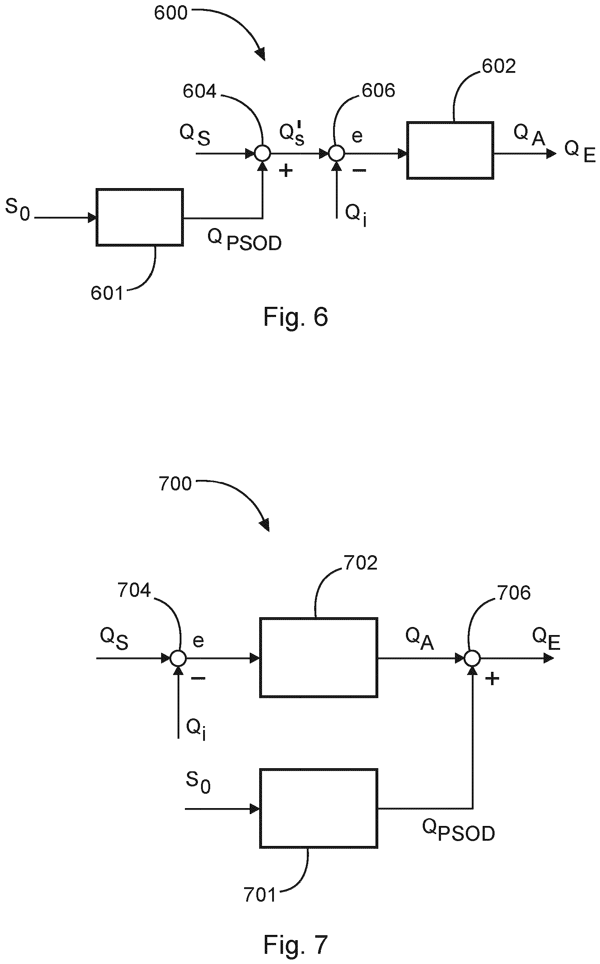

Fig. 6 bis 8 zeigen alternative Strukturen zum Erzeugen eines Einspeisesollsignals in Abhängigkeit von einem Basissollsignal und in Abhängigkeit von einem Dämpfungssollsignal. Alle drei Strukturen der Fig. 6 bis 8 bauen auf einer Struktur mit einem Kernregler 602, 702 bzw. 802 auf. Ein solcher Kernregler ist zum Umsetzen eines Basissollsignals vorgesehen, das noch kein Dämpfungssollsignal aufweist.

Hier geht es dabei um ein Basisblindleistungssollsignal als Basissollsignal. Dieses Basisblindleistungssollsignal Qs soll, zumindest solange keine Berücksichtigung eines Dämpfungssollsignals erfolgt, als Einspeisesignal eingespeist werden und dazu erzeugt der Kernregler ein Reglerausgangssignal Q_{A}. Ohne Berücksichtigung des Dämpfungssollsignals kann dieses einem Einspeisesollsignal Q_{E} entsprechen. Dazu erhält der Kernregler als Eingangssignal einen Regelfehler e (kann auch synonym als Regelabweichung bezeichnet werden) als Ergebnis eines Soll-Istwertvergleichs zwischen dem Basisblindleistungssollsignal Qs und einem tatsächlich eingespeisten Blindleistungssignal Qi. Abweichungen zwischen dem Basisblindleistungssollsignal Qs und dem tatsächlich eingespeisten Blindleistungssignal Qi, also dem Istwert, können sich besonders durch das Verhalten der Einspeiseeinheit, also insbesondere einer Wechselrichteranordnung, und gegebenenfalls weiterer elektrischer Komponenten wie Drosseln, Transformatoren und Überragungsleitungen ergeben.

Zur zusätzlichen Einspeisung des Dämpfungssollsignals bzw. eines dem Dämpfungssollsignal entsprechenden Dämpfungssignals, sieht Fig. 6 eine Gesamtstruktur 600 vor, bei der das Dämpfungssollsignal Q_{PSOD} an einem ersten Summierglied 604 auf das Basisblindleistungssollsignal Qs aufgeschaltet wird. Es ergibt sich ein modifiziertes Basisblindleistungssollsignal Qs' und zu dem wird an dem zweiten Summierglied 606 der Regelfehler e gebildet. Der Regelfehler e wird dann wie bisher in den Kernregler 602 eingegeben.

Das Dämpfungssollsignal wird durch den Dämpfungsregler 601 erzeugt, der im Wesentlichen der Dämpfungsregelungsstruktur 400 der Fig. 4 entsprechen kann. Entsprechend erhält der Dämpfungsregler 601 auch ein Eingangssignal So, das dem Eingangssignal So der Fig. 4 entsprechen kann.

Fig. 6 zeigt somit eine einfache Variante, bei der das Problem besteht, dass der bisherige Kernregler 602 dieses zusätzliche Dämpfungssollsignal mit berücksichtigen muss. Oftmals ist ein solcher Kernregler 602 für das Umsetzen eines im Wesentlichen konstanten Blindleistungssollsignals, also Basisblindleistungssollsignals Q_{S}, vorgesehen, und daher nicht unbedingt für das Ausregeln eines schwingenden Sollsignals vorgesehen. Wenn dieser Kernregler 602 aber schnell genug ist, also schnell genug ausgelegt ist und/oder die zu dämpfende Schwingung langsam genug ist bzw. eine entsprechend langsame zu dämpfende Schwingung erwartet wird, kann die Struktur der Fig. 6 verwendet werden.

Fig. 7 zeigt alternativ eine Gesamtstruktur 700, bei der das Dämpfungssollsignal Q_{PSOD} hinter dem Kernregler 702 an einem zweiten Summierglied 706 auf das Reglerausgangssignal Q_{A} aufgeschaltet wird. Daraus ergibt sich unmittelbar das Einspeisesollsignal Q_{E}. Auch hier ist ein Dämpfungsregler 701 vorgesehen, der im Wesentlichen der Dämpfungsregelungsstruktur 400 der Fig. 4 entsprechen kann und auch dasselbe Eingangssignal So erhalten kann.

In der Gesamtstruktur 700 der Fig. 7 ist ebenfalls ein erstes Summierglied 704 vorgesehen, das einen Regelfehler e bildet, nämlich aus der Differenz des Basisblindleistungssollsignals Qs und dem eingespeisten Blindleistungsistwert Qi. Das führt aber zu dem Effekt, dass sich in dem Regelfehler e auch ein aufgeschaltetes Dämpfungssignal wiederfindet, das basierend auf dem Dämpfungssollsignal überlagert eingespeist wird. Durch Aufschaltung des Dämpfungssollsignals Q_{PSOD} an dem zweiten Summierglied 706 weicht die eingespeiste Blindleistung wegen des modifizierten Einspeisesollsignals Q_{E} um dieses Dämpfungssollsignal Q_{PSOD} von dem Basisblindleistungssollsignal Qs ab. Der eingespeiste Blindleistungsistwert Qi ist dadurch entsprechend verändert. Das kann dazu führen, dass der Kernregler 702 diesen dadurch entstehenden, variierenden Regelfehler auszuregeln versucht. Ist aber der Kernregler 702 ausreichend langsam im Vergleich zum zu dämpfenden Schwingungssignal Sd und damit im Vergleich zum Dämpfungssollsignal Q_{PSOD}, so kann diese einfache Gesamtstruktur 700 geeignet oder zumindest ausreichend sein.

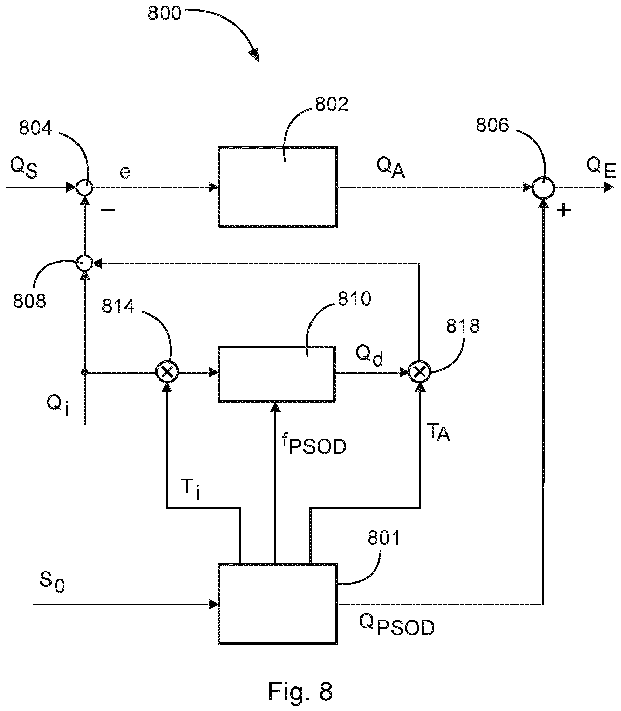

Eine Verbesserung kann aber über die Gesamtstruktur 800 der Fig. 8 erreicht werden. Die Gesamtstruktur 800 sieht im Grunde vor, das Dämpfungssollsignal Q_{PSOD} an einem zweiten Summierglied 806 auf das Reglerausgangssignal Q_{A} aufzuschalten, um so das Einspeisesollsignal Q_{E} zu erhalten. Zusätzlich ist vorgesehen, den eingespeisten Blindleistungsistwert Qi um das gemäß Dämpfungssollsignal eingespeiste Dämpfungssignal zu bereinigen. Dadurch kann erreicht werden, dass der Kernregler 802 weder das Dämpfungssollsignal mit umsetzen muss, noch durch dieses im Regelfehler e beeinflusst wird.

Dazu ist im Grunde vorgesehen, dass das eingespeiste Blindleistungsistsignal Qi über einen Bandpassfilter 810 geführt wird. Der Bandpassfilter 810 kann dem Bandpassfilterblock 410 der Fig. 4 entsprechen und erhält auch die Dämpfungsfrequenz f_{PSOD} als Eingangswert, nämlich von dem Dämpfungsregler 801, der im Wesentlichen der Dämpfungsregelungsstruktur 400 entsprechen kann. Der Bandpassfilter 810 filtert ein Kompensationssignalanteil aus dem erfassten Einspeisesignal, also aus dem Blindleistungsistsignal Qi. Der Kompensationssignalanteil entspricht im Idealfall zumindest in seiner Frequenz einem dem Dämpfungssollsignal Q_{PSOD} entsprechendes Dämpfungssignal Qd. Es wird aber durch das Verhalten der Einspeiseeinrichtung, insbesondere einer Umrichteranordnung, und gegebenenfalls weiterer Elemente wie Drosseln, Transformatoren und Übertragungsleitungen beeinflusst sein. Das Dämpfungssignal Qd entspricht somit tatsächlich nicht genau dem Dämpfungssollsignal Q_{PSOD}, sodass zum Bereinigen auch nicht einfach das Dämpfungssollsignal Q_{PSOD} verwendet werden kann.

Jedenfalls wird der so erzeugte Kompensationssignalanteil als Dämpfungskompensationssignal in einem dritten Summierglied 808 von dem Blindleistungsistsignal Qi abgezogen. Idealisierend bleibt somit ein um das Dämpfungssignal Qd bereinigtes Blindleistungssignal übrig, das in dem ersten Summierglied 804 von dem Basisblindleistungssollsignal Qs abgezogen wird, um so den Regelfehler e zu bilden, der damit entsprechend um das Dämpfungssignal Qd bereinigt ist.

Gemäß der Dämpfungsregelungsstruktur 400 hängt die Erzeugung bzw. Ausgabe des Dämpfungssollsignals Q_{PSOD} von dem InitialisierungstriggerTi und dem Aktivierungstrigger T_{A} ab. Diese Initialisierung bzw. Aktivierung wird damit sinngemäß auch in der Gesamtstruktur 800 durch einen Eingangsmultiplikator 814 und einen Ausgangsmultiplikator 818 umgesetzt. Mit anderen Worten ist die Bereinigung des Blindleistungsistsignals Qi an dem dritten Summierglied 808 auch dann nicht aktiv, wenn gar kein Dämpfungssollsignal Q_{PSOD} erzeugt oder ausgegeben wird.

## Patentansprüche

1. Verfahren zum Dämpfen niederfrequenter Schwingungen in einem elektrischen Versorgungsnetz mittels einer in das elektrische Versorgungsnetz einspeisenden Einspeiseeinrichtung, insbesondere Windenergieanlage, wobei das elektrische Versorgungsnetz eine Netzspannung und eine Netzfrequenz aufweist, umfassend die Schritte
- Aufnehmen eines die niederfrequenten Schwingungen aufweisenden Netzsignals,
- Aufteilen eines Gesamtfrequenzbereichs des Netzsignals, in dem zu dämpfende Schwingungen zu erwarten sind, in mehrere Teilfrequenzbereiche, jeweils mit einer unteren und einer oberen Bereichsfrequenz,
- Durchführen jeweils einer Frequenzanalyse des Netzsignals für jeden Teilfrequenzbereich, um jeweils eine oder mehrere Schwingungen mit einer in dem Teilfrequenzbereich liegenden Schwingungsfrequenz zu identifizieren, sofern vorhanden,
- in Abhängigkeit von den Frequenzanalysen aller Teilfrequenzbereiche Identifizieren einer zu dämpfenden niederfrequenten Schwingung als Zielschwingung,
- Erfassen der Zielschwingung wenigstens nach Frequenz und Amplitude und optional nach Phase,
- Bestimmen eines Dämpfungssollsignals in Abhängigkeit von der nach Frequenz und Amplitude und ggf. Phase erfassten Zielschwingung zum Dämpfen der erfassten Zielschwingung,
- Erzeugen eines Einspeisesollsignals in Abhängigkeit von dem Dämpfungssollsignal und einem Basissollsignal und
- Erzeugen und Einspeisen eines Einspeisesignals in Abhängigkeit von dem Einspeisesollsignals (QE).

2. Verfahren nach Anspruch 1, **dadurch gekennzeichnet, dass**
- das Dämpfungssollsignal eine einzuspeisende Blindleistung beschreibt und insbesondere
- das Basissollsignal durch eine Blindleistungssteuerung als Sollsignal für eine einzuspeisende Blindleistung vorgegeben wird.

3. Verfahren nach Anspruch 1 oder 2, **dadurch gekennzeichnet, dass**
- zum Erzeugen des Einspeisesollsignals ein Kernregler (802) vorgesehen ist, der in Abhängigkeit von dem Basissollsignal und dem eingespeisten Einspeisesignal ein Reglerausgangssignal ausgibt, und dass
- das Einspeisesollsignal in Abhängigkeit von dem Reglerausgangssignal bestimmt wird, wobei
- das Dämpfungssollsignal oder ein Teil davon
- auf das Basissollsignal aufgeschaltet wird, und dadurch vom Kernregler berücksichtigt wird, und/oder
- auf das Reglerausgangssignal aufgeschaltet wird, und dadurch das Einspeisesollsignal beeinflusst, und/oder dass
- eingangsseitig des Kernreglers ein vom Dämpfungssollsignal abhängiges Dämpfungskompensationssignal aufgeschaltet wird, insbesondere auf das Basissollsignal aufgeschaltet wird, um einen Einfluss des Dämpfungssollsignals über das rückgeführte Einspeisesignal auf den Kernregler zumindest teilweise zu kompensieren.

4. Verfahren nach einem der vorstehenden Ansprüche, **dadurch gekennzeichnet, dass**
- eingangsseitig eines bzw. des Kernreglers, der in Abhängigkeit von dem Basissollsignal und dem eingespeisten Einspeisesignal ein Reglerausgangssignal (QA) ausgibt, ein bzw. das Dämpfungskompensationssignal aufgeschaltet wird, insbesondere auf das Basissollsignal aufgeschaltet wird, wobei
- das Dämpfungskompensationssignal durch Herausfiltern eines Kompensationssignalanteils aus dem erfassten Einspeisesignal erzeugt wird, wobei
- der Kompensationssignalanteil eine Schwingungsfrequenz der identifizierten Zielschwingung aufweist und
- das Dämpfungskompensationssignal in Abhängigkeit von dem Kompensationssignalanteil gebildet wird, insbesondere dem Kompensationssignalanteil entspricht, und wobei insbesondere
- zum Herausfiltern des Dämpfungskompensationssignals aus dem erfassten Einspeisesignal ein Bandpassfilter verwendet und auf die Schwingungsfrequenz der identifizierten Zielschwingung eingestellt wird.

5. Verfahren nach einem der vorstehenden Ansprüche, **dadurch gekennzeichnet, dass**
- wenigstens drei überlappende Teilfrequenzbereiche vorgesehen sind, insbesondere wenigstens vier, fünf oder sechs, und/oder dass
- die obere Bereichsfrequenz eines Teilfrequenzbereichs im Bereich vom 1,5-fachen bis 10-fachen Wert der unteren Bereichsfrequenz desselben Teilfrequenzbereichs liegt, insbesondere im Bereich vom doppelten bis dreifachen Wert, und/oder dass
- die jeweilige Frequenzanalyse für jeden Teilfrequenzbereich unterschiedliche Zeitausschnitte des erfassten Netzsignals verwendet und unterschiedliche Abtastraten aufweist, insbesondere, dass
- jedem Teilfrequenzbereich ein Zeitausschnitt des Netzsignals zur Auswertung zugeordnet wird, wobei sich Zeitausschnitte mehrerer Teilfrequenzbereiche überschneiden können, und
- der Zeitausschnitt umso größer ist, je kleiner die untere Bereichsfrequenz des zugeordneten Teilfrequenzbereichs ist, und/oder
- jedem Teilfrequenzbereich zum Durchführen der Frequenzanalyse eine Abtastrate zugeordnet ist, die umso größer ist, je größer die obere Bereichsfrequenz des Teilfrequenzbereichs ist, und/oder
- eine Anzahl von Abtastungen pro Zeitausschnitt verwendet wird, die für unterschiedliche Teilfrequenzbereiche, insbesondere für alle Teilfrequenzbereiche, gleich ist insbesondere wird vorgeschlagen, dass
- die Dauer des Zeitausschnitts des Teilfrequenzbereichs wenigstens dem halben, insbesondere wenigstens dem ganzen Kehrwert der unteren Bereichsfrequenz entspricht, und/oder maximal dem fünffachen, Kehrwert der unteren Bereichsfrequenz entspricht, und/oder dass
- die Abtastrate jeweils eines Teilfrequenzbereichs wenigstens der doppelten, insbesondere wenigstens der fünffachen oberen Bereichsfrequenz entspricht, und/oder dass
- die Abtastrate jeweils eines Teilfrequenzbereichs höchstens der hundertfachen, insbesondere höchstens der fünfzigfachen oberen Bereichsfrequenz entspricht.

6. Verfahren nach einem der vorstehenden Ansprüche, **dadurch gekennzeichnet, dass**
wenn in einem ersten der Teilfrequenzbereiche mit einer höheren oberen Bereichsfrequenz als ein weiterer der Teilfrequenzbereiche, eine Schwingung mit einer Schwingfrequenz erkannt wurde,
- diese Schwingfrequenz als potentielle Aliasingfrequenz berücksichtigt wird, und
- für die Frequenzanalyse von wenigstens einem zweiten der Teilfrequenzbereiche mit kleinerer oberer Bereichsfrequenz als beim ersten Teilfrequenzbereich ein gefiltertes Signal des Netzsignals verwendet wird, aus dem Signalanteile mit der Aliasingfrequenz herausgefiltert werden.

7. Verfahren nach einem der vorstehenden Ansprüche, **dadurch gekennzeichnet, dass**
- in einem ersten Analyseschritt für jeden Teilfrequenzbereich die Frequenzanalyse durchgeführt wird, um wenigstens eine Schwingung mit einer ersten Frequenz zu identifizieren,
- in einem zweiten Analyseschritt Frequenz, Amplitude und optional Phase der im ersten Analyseschritt identifizierten Schwingung durch eine auf die identifizierte Schwingung angepasste Signaluntersuchung identifiziert werden, wobei insbesondere
- die angepasste Signaluntersuchung der identifizierten Schwingung gegenüber der Frequenzanalyse, die die Schwingung im erstens Analyseschritt identifiziert hat, eine höhere Auflösung aufweist und/oder gezielt auf die im ersten Analyseschritt identifizierte erste Frequenz abgestimmt ist.

8. Verfahren nach einem der vorstehenden Ansprüche, **dadurch gekennzeichnet, dass**
- zum Bestimmen des Dämpfungssollsignals ein Eingangssignal, das dem aufgenommene Netzsignal entspricht, oder davon abgeleitet ist, mit einem Bandpassfilter gefiltert wird,
- der Bandpassfilter in Abhängigkeit von der identifizierten Zielschwingung eingestellt wird, um aus dem Eingangssignal einen Signalanteil mit der Schwingungsfrequenz der identifizierten Zielschwingung passieren zu lassen, um nur die Zielschwingung aus dem Eingangssignal als extrahierte Netzschwingung passieren zu lassen, und
- Umformen der extrahierten Netzschwingung in das Dämpfungssollsignal.

9. Verfahren nach einem der vorstehenden Ansprüche, **dadurch gekennzeichnet, dass**
- zum Umformen einer bzw. der extrahierten Netzschwingung in das Dämpfungssollsignal wenigstens ein Umformelement verwendet wird aus der Liste aufweisend
- einen Tiefpassfilter zum Herausfiltern eines Rauschanteils,
- ein Verstärkungselement zum Verstärken der extrahierten Netzschwingung,
- einen Hochpassfilterzum Herausfiltern niederfrequenter Signalanteile, die besonders bei einspeisenden Windenergieanlagen durch Windschwankungen auftreten können, und
- wenigstens einen Lead-Lag-Filter, zum Kompensieren von kommunikationsbedingten Verzögerungszeiten.

10. Verfahren nach einem der vorstehenden Ansprüche, **dadurch gekennzeichnet, dass**
- in Abhängigkeit von einer Eigenschaft der identifizierten Zielschwingung, insbesondere in Abhängigkeit von einer Amplitude der identifizierten Zielschwingung, das Bestimmen und/oder Aufschalten des Dämpfungssollsignals aktiviert oder deaktiviert wird, wobei insbesondere
- zum Aktivieren eine Aktivierungsschwelle und zum Deaktivieren eine Deaktivierungsschwelle jeweils als Vergleichswert für die Amplitude der Zielschwingung vorgesehen ist, und
- die Aktivierungsschwelle größer als die Deaktivierungsschwelle ist.

11. Verfahren nach einem der vorstehenden Ansprüche, **dadurch gekennzeichnet, dass**
- zum Aufschalten des Dämpfungssignals eine Aktivierungsfunktion erzeugt wird, die das aufzuschaltende Dämpfungssollsignal zu Beginn des Aufschaltens gesteuert hochfährt, insbesondere gemäß einer Rampenfunktion hochfährt und/oder
- zum Beenden des Aufschaltens des Dämpfungssignals eine Deaktivierungsfunktion verwendet wird, die das aufgeschaltete Dämpfungssollsignal zum Beenden des Aufschaltens gesteuert herunterfährt, insbesondere gemäß einer Rampenfunktion herunterfährt.

12. Verfahren nach einem der vorstehenden Ansprüche, **dadurch gekennzeichnet, dass**
- bei mehreren erkannten Schwingungen eine als Zielschwingung ausgewählt wird, insbesondere in Abhängigkeit von einer Amplitude, insbesondere so, dass von mehreren erkannten Schwingungen diejenige mit der größten Amplitude als Zielschwingung ausgewählt wird,
- das Dämpfungssollsignal in Abhängigkeit von der ausgewählten Zielschwingung erzeugt wird, und
- nach einer bzw. der Aktivierung des Bestimmens und/oder Aufschaltens des Dämpfungssignals die Zielschwingung beibehalten wird, und erst nach einem Deaktivieren des Bestimmens bzw. Aufschaltens eine andere der erkannten Schwingungen als Zielschwingung ausgewählt wird.

13. Verfahren nach einem der vorstehenden Ansprüche, **dadurch gekennzeichnet, dass**
- der Gesamtfrequenzbereich vorgebbar ist, und
- auf eine Vorgabe des Gesamtfrequenzbereichs eine automatische Aufteilung des Gesamtfrequenzbereichs in die Teilfrequenzbereiche erfolgt.

14. Verfahren nach einem der vorstehenden Ansprüche, **dadurch gekennzeichnet, dass**
- das Einspeisen des Einspeisesignals mittels eines mehrere Windenergieanlagen umfassenden Windparks erfolgt, wobei
- die Windenergieanlagen jeweils einen Teil des Einspeisesignals erzeugen, und
- jede Windenergieanlage dieselbe Zielschwingung zum Erzeugen des Einspeisesignals berücksichtigt.

15. Windenergiesystem, umfassend eine oder mehrere Windenergieanlagen, dazu vorbereitet,
ein Verfahren zum Dämpfen niederfrequenter Schwingungen in einem elektrischen Versorgungsnetz auszuführen, wobei das elektrische Versorgungsnetz eine Netzspannung und eine Netzfrequenz aufweist, umfassend
- einen Messaufnehmer zum Aufnehmen eines die niederfrequenten Schwingungen aufweisenden Netzsignals,
- eine Steuereinrichtung
- zum Aufteilen eines Gesamtfrequenzbereichs des Netzsignals, in dem zu dämpfende Schwingungen zu erwarten sind, in mehrere Teilfrequenzbereiche, jeweils mit einer unteren, einer oberen und einer mittleren Bereichsfrequenz, und
- zum Durchführen jeweils einer Frequenzanalyse des Netzsignals für jeden Teilfrequenzbereich, um jeweils eine oder mehrere Schwingungen mit einer in dem Teilfrequenzbereich liegenden Schwingungsfrequenz zu identifizieren, sofern vorhanden, und
- dazu vorbereitet,
- in Abhängigkeit von den Frequenzanalysen aller Teilfrequenzbereiche das Identifizieren einer zu dämpfenden niederfrequenten Schwingung als Zielschwingung durchzuführen,
- ein Erfassen der Zielschwingung wenigstens nach Frequenz und Amplitude und optional nach Phase, durchzuführen,
- ein Bestimmen eines Dämpfungssollsignals in Abhängigkeit von der nach Frequenz und Amplitude und ggf. Phase erfassten Zielschwingung zum Dämpfen der erfassten Zielschwingung durchzuführen,
- ein Erzeugen eines Einspeisesollsignals in Abhängigkeit von dem Dämpfungssollsignal und einem Basissollsignal auszuführen und
- ein Erzeugen und Einspeisen eines Einspeisesignals in Abhängigkeit von dem Einspeisesollsignals auszuführen, wobei insbesondere das
- Windenergiesystem dazu vorbereitet ist, ein Verfahren nach einem der Ansprüche 1 bis 14 auszuführen, und
- insbesondere die Steuereinrichtung dazu vorbereitet ist, das Verfahren durchzuführen.
